# EUROPEAN PATENT APPLICATION

(11) **EP 2 599 848 A1**
(43) Date of publication of application: **05.06.2013**
(21) Application number: 11812439.5
(22) Date of filing: 25.07.2011
(51) Int. Cl.: C09K 3/18, D06M 13/352, D06M 13/395, D06M 15/277

(54) **WATER-AND-OIL REPELLANT COMPOSITION, FUNCTIONAL TEXTILE PRODUCT, AND PRODUCTION METHOD FOR FUNCTIONAL TEXTILE PRODUCT**

(30) Priority: 30.07.2010 JP 2010172120
(71) Applicant: Daikin Industries, Ltd., Osaka-shi, Osaka 530-8323 (JP)
(72) Inventor: YOSHINO Gou, Fukui-shi Fukui 910-8670 (JP); TANIGUCHI Norihiro, Fukui-shi Fukui 910-8670 (JP); ODA Hiromu, Fukui-shi Fukui 910-8670 (JP); NISHIKAWA Makoto, Fukui-shi Fukui 910-8670 (JP); ENOMOTO Takashi, Settsu-shi Osaka 566-8585 (JP); MIYAHARA Masahiro, Settsu-shi Osaka 566-8585 (JP); YAMAMOTO Ikuo, Settsu-shi Osaka 566-8585 (JP)
(74) Representative: Hayes, Adrian Chetwynd
(86) International application number: PCT/JP2011/066869
(87) International publication number: WO 2012/014850

(57) **Abstract**

The water-and-oil repellant composition of the invention including an aqueous dispersion of a pyrazole blocked hydrophobic polyisocyanate containing a pyrazole blocked hydrophobic polyisocyanate represented by the following formula (I) and a non-ionic surface active agent, and a water-and-oil repellant component having a perfluoroalkyl group with 6 carbon atoms or less is provided:

R (-NH-CO-Z)ₘ (I)

[in the formula (I), m represents an integer of 2 or more; R represents a residue after an "m" number of isocyanate groups have been removed from a polyisocyanate compound with an "m" number of isocyanate groups; Z represents a residue, which is the same or different from each other, after hydrogen atoms have been removed from active hydrogen-containing compounds that are capable of reacting with an isocyanate group, and at least two of the Z's are a pyrazole groups represented by the formula (II): 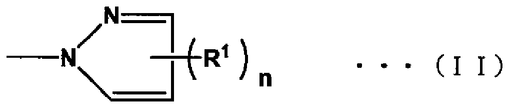 {in the formula (II), n represents an integer of from 0 to 3; if n is 1 or higher, R¹, which is the same or different from each other, represents an alkyl group having 1 to 6 carbon atoms, an alkenyl group having 2 to 6 carbon atoms, an aralkyl group having 7 to 12 carbon atoms, an N-substituted carbamyl group, a phenyl group, -NO₂, a halogen atom, or -CO-O-R² (in the formula, R² is a hydrogen atom or an alkyl group having 1 to 6 carbon atoms)}].

## Description

### Technical Field

The present invention relates to a water-and-oil repellant composition, a functional textile product having a water-and-oil repellant property, and a method for producing the textile product.

### Background Art

For the purpose of providing a water repellant property or an anti-fouling property to a textile product, a water-and-oil repellant component having a perfluoroalkyl group with 8 carbon atoms or more has been conventionally used.

A textile product is required to maintain a water-and-oil repellant property at sufficient level even after repeated wash. As a method of improving a long lasting water-and-oil repellant property, a water-and-oil repellant treatment method using a water-and-oil repellant component in combination with a block polyisocyanate compound is known, as disclosed in the following Patent Documents 1 to 4, for example.

### Citation List

### Patent Document

Patent Document 1: Japanese Unexamined Patent Application Publication No. Sho 56-165072
Patent Document 2: Japanese Examined Patent Application Publication No. Sho 64-11239
Patent Document 3: Japanese Unexamined Patent Application Publication (Translation of PCT Application) No.2006-508226
Patent Document 4: Japanese Unexamined Patent Application Publication (Translation of PCT Application) No.2002-511507

### Summary of Invention

### Technical Problem

It is noted that, when discharged into an environment, the water-and-oil repellant component having a perfluoroalkyl group with 8 carbon atoms or more may decompose and produce perfluorooctanoic acid (herein below, abbreviated as "PFOA"). Since PFOA is a substance known to have an accumulation problem or toxicity in a natural environment or a human body, studies are actively made to replace the water-and-oil repellant component having a perfluoroalkyl group with 8 carbon atoms with a component with 6 carbon atoms or less which does not produce PFOA.

However, the water-and-oil repellant component having a perfluoroalkyl group with 6 carbon atoms or less tends to have a poor long lasting water-and-oil repellant property compared to those with 8 carbon atoms or more. As used herein, the expression "long lasting water-and-oil repellant property" indicates a water-and-oil repellant property which is maintained after repeated wash. Further, inventors of the present invention found that, when a water-and-oil repellant component having a perfluoroalkyl group with 6 carbon atoms or less is used, the long lasting water-and-oil repellant property is not obtained at sufficient level according to the method involving combined use of a block polyisocyanate compound as described in the Patent Document above.

The present invention, which is devised under the circumstances described above, has a purpose of providing a water-and-oil repellant composition which is capable of providing a sufficient and long lasting water-and-oil repellant property by using a water-and-oil repellant component having a perfluoroalkyl group with 6 carbon atoms or less, a functional textile product having a sufficient and long lasting water-and-oil repellant property, and a method for producing the functional textile product.

### Solution to Problem

As a result of intensive studies to solve the problems described above, the inventors of the present invention found that, when a specific pyrazole blocked hydrophobic polyisocyanate aqueous dispersion, that is obtained by using a specific surface active agent and exhibits a stable emulsified dispersion state, is used in combination with a water-and-oil repellant component having a perfluoroalkyl group with 6 carbon atoms or less, the long lasting water-and-oil repellant property of a treated textile product can be improved to sufficient level. Based on those findings, the inventors completed the invention.

Thus, provided by the invention is a water-and-oil repellant composition that contains a pyrazole blocked hydrophobic polyisocyanate aqueous dispersion containing a pyrazole blocked hydrophobic polyisocyanate represented by the following formula (I) and a non-ionic surface active agent, and a water-and-oil repellant component having a perfluoroalkyl group with 6 carbon atoms or less

R(-NH-CO-Z)ₘ (I)

[in the formula (I), m represents an integer of 2 or more, R represents a residue after an m number of isocyanate groups have been removed from a polyisocyanate compound with an m number of isocyanate groups, Z represents a residue, which may be the same or different from each other, after hydrogen atoms have been removed from active hydrogen-containing compounds that are capable of reacting with an isocyanate group, and at least two of the Zs are a pyrazole group represented by the following formula (II).

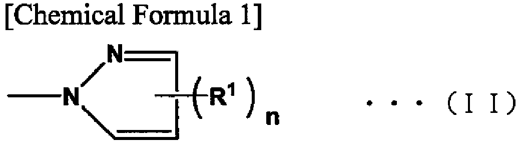

{in the formula (II), n represents an integer of from 0 to 3, and if n is 1 or higher, R¹, which may be the same of different from each other, represents an alkyl group having 1 to 6 carbon atoms, an alkenyl group having 2 to 6 carbon atoms, an aralkyl group having 7 to 12 carbon atoms, an N-substituted carbamyl group, a phenyl group, -NO₂, a halogen atom, or -CO-O-R² (in the formula, R² represents a hydrogen atom or an alkyl group having 1 to 6 carbon atoms)}].

As the water-and-oil repellant composition of the invention has the constitution described above, a subject to be treated can be provided with a sufficient and long lasting water-and-oil repellant property based on the water-and-oil repellant component having a perfluoroalkyl group with 6 carbon atoms or less. When a textile substrate is treated with the water-and-oil repellant composition of the invention, a functional textile product with a sufficient and long lasting water-and-oil repellant property can be obtained. Further, according to the water-and-oil repellant composition of the invention, the long lasting water-and-oil repellant property which is the same as in the conventional treatment method using a water-and-oil repellant component having a perfluoroalkyl group with 8 carbon atoms or more in combination with an aqueous dispersion of a blocked polyisocyanate can be obtained, and thus it is possible to substitute or lower the water-and-oil repellant component having a perfluoroalkyl group with 8 carbon atoms or more which is known to have a problem of PFOA.

Further, according to the water-and-oil repellant composition of the invention, since the aqueous dispersion of a pyrazole blocked hydrophobic polyisocyanate according to the invention has excellent storage stability even when used in combination with textile treatment chemicals and can be treated in an aqueous system, a functional textile product having a sufficient and long lasting water-and-oil repellant property can be easily produced.

In the water-and-oil repellant composition of the invention, the liquid medium of the aqueous dispersion of a pyrazole blocked hydrophobic polyisocyanate is preferably water or a mixture containing water and at least one organic solvent which is selected from a group consisting of ketones, esters, ethers, aromatic hydrocarbons, and aliphatic hydrocarbons, that are separated when admixed with water.

Further, from the viewpoint of storage stability and chemical incorporation stability of the water-and-oil repellant composition, it is preferable that the liquid medium for the aqueous dispersion of a pyrazole blocked hydrophobic polyisocyanate is a mixture containing water and ethers.

Further, from the viewpoint of storage stability of the water-and-oil repellant composition, the non-ionic surface active agent is a non-ionic surface active agent having HLB of 10 or more.

Further, from the viewpoint of long lasting water-and-oil repellant property, all Zs in the formula (I) is a pyrazole group that is represented by the above formula (II).

Also provided by the invention is a functional textile product provided with a water-and-oil repellant property by the water-and-oil repellant composition of the invention. The functional textile product of the invention can have a sufficient and long lasting water-and-oil repellant property.

Also provided by the invention is a method for producing a functional textile product having a water-and-oil repellant property, which includes a step of contacting a textile substrate with a treatment liquid A containing an aqueous dispersion of a pyrazole blocked hydrophobic polyisocyanate which contains the pyrazole blocked hydrophobic polyisocyanate represented by the formula (I) and a non-ionic surface active agent and a treatment liquid B containing a water-and-oil repellant component having a perfluoroalkyl group with 6 carbon atoms or less, or contacting a textile substrate with a treatment liquid C containing an aqueous dispersion of a pyrazole blocked hydrophobic polyisocyanate which contains the pyrazole blocked hydrophobic polyisocyanate represented by the formula (I) and a non-ionic surface active agent and a water-and-oil repellant component having a perfluoroalkyl group with 6 carbon atoms or less.

R(-NH-CO-Z)ₘ (I)

[in the formula (I), m represents an integer of 2 or more, R represents a residue after an m number of isocyanate groups have been removed from a polyisocyanate compound with an m number of isocyanate groups, Z represents a residue, which may be the same or different from each other, after hydrogen atoms have been removed from active hydrogen-containing compounds that are capable of reacting with an isocyanate group, and at least two of the Zs are a pyrazole group represented by the following formula (II).

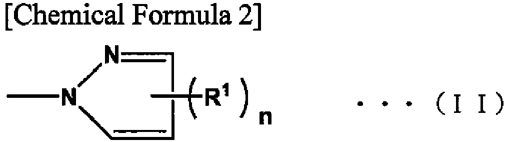

{in the formula (II), n represents an integer of from 0 to 3, and if n is 1 or higher, R¹, which may be the same of different from each other, represents an alkyl group having 1 to 6 carbon atoms, an alkenyl group having 2 to 6 carbon atoms, an aralkyl group having 7 to 12 carbon atoms, an N-substituted carbamyl group, a phenyl group, -NO₂, a halogen atom, or -CO-O-R² (in the formula, R² represents a hydrogen atom or an alkyl group having 1 to 6 carbon atoms)}].

### Advantageous Effects of Invention

According to the invention, a water-and-oil repellant composition capable of providing a sufficient and long lasting water-and-oil repellant property by using a water-and-oil repellant component having a perfluoroalkyl group with 6 carbon atoms or less, a functional textile product having a sufficient and long lasting water-and-oil repellant property, and a method of producing the functional textile product are provided.

### Description of Embodiments

The water-and-oil repellant composition of the invention is characterized in that it contains an aqueous dispersion of a pyrazole blocked hydrophobic polyisocyanate containing the pyrazole blocked hydrophobic polyisocyanate represented by the following formula (I) and a non-ionic surface active agent, and a water-and-oil repellant component having a perfluoroalkyl group with 6 carbon atoms or less.

R(-NH-CO-Z)ₘ (I)

[in the formula (I), m represents an integer of 2 or more, R represents a residue after an m number of isocyanate groups have been removed from a polyisocyanate compound with an m number of isocyanate groups, Z represents a residue, which may be the same or different from each other, after hydrogen atoms have been removed from active hydrogen-containing compounds that are capable of reacting with an isocyanate group, and at least two of the Zs are a pyrazole group represented by the following formula (II).

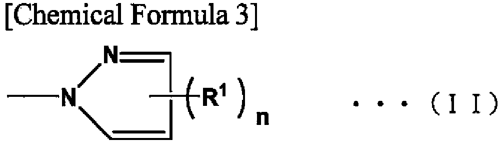

{in the formula (II), n represents an integer of from 0 to 3, and if n is 1 or higher, R¹, which may be the same of different from each other, represents an alkyl group having 1 to 6 carbon atoms, an alkenyl group having 2 to 6 carbon atoms, an aralkyl group having 7 to 12 carbon atoms, an N-substituted carbamyl group, a phenyl group, -NO₂, a halogen atom, or -CO-O-R² (in the formula, R² represents a hydrogen atom or an alkyl group having 1 to 6 carbon atoms)}].

The pyrazole blocked hydrophobic polyisocyanate represented by the formula (I) can be obtained by reacting a polyisocyanate compound having an m number of isocyanate groups with an active hydrogen containing compound which can react with an isocyanate group. For such case, in order for at least two Zs in the formula (I) to be a pyrazole group represented by the formula (II), it may be blocked with a pyrazole compound represented by the following formula (III).

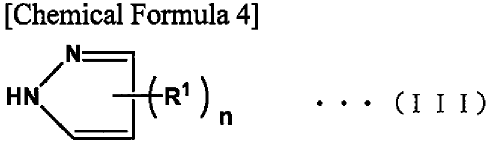

In the formula (III), n represents an integer of from 0 to 3, and if n is 1 or higher, R¹, which may be the same of different from each other, represents an alkyl group having 1 to 6 carbon atoms, an alkenyl group having 2 to 6 carbon atoms, an aralkyl group having 7 to 12 carbon atoms, an N-substituted carbamyl group, a phenyl group, -NO₂, a halogen atom, or -CO-O-R² (in the formula, R² represents a hydrogen atom or an alkyl group having 1 to 6 carbon atoms). Herein, examples of the alkyl group having 1 to 6 carbon atoms which is represented by R¹ include a methyl group, an ethyl group, an n-propyl group, an isopropyl group, an n-butyl group, an isobutyl group, an n-pentyl group, and an n-hexyl group. Examples of the alkenyl group having 2 to 6 carbon atoms include a vinyl group, an allyl group, a butenyl group, a pentenyl group, and a hexenyl group. Example of the aralkyl group having 7 to 12 carbon atoms include a benzyl group, an ethyl phenyl group, a propyl phenyl group, a butyl phenyl group, a methyl naphthyl group, and an ethyl naphthyl group. In the present invention, from the viewpoint of easy obtainability of a pyrazole compound, n is preferably 1 or higher. Further, from the same point of view, R¹ is preferably an alkyl group having 1 to 4 carbon atoms, an alkenyl group having 2 to 4 carbon atoms, an aralkyl group having 7 to 9 carbon atoms, a phenyl group, -NO₂, a bromo group, or -CO-O-R² (in the formula, R² represents an alkyl group having 1 to 4 carbon atoms).

In the present invention, it is preferable to use a pyrazole blocked hydrophobic polyisocyanate which is obtained by reacting the pyrazole compound represented by the formula (III) at molar ratio of 2 or higher moles per mole of the polyisocyanate compound with an m number of isocyanate groups, and more preferably at molar ratio of (m × 0.8) or higher moles when m is 3 or higher.

As for the polyisocyanate compound with an m number of isocyanate groups, any known polyisocyanate compound can be used. Examples thereof include a diisocyanate compound such as an alkylene (preferably having 1 to 12 carbon atoms) diisocyanate, aryl diisocyanate, and cycloalkyl diisocyanate, and a modified polyisocyanate compound such as dimer or trimer of those diisocyanate compounds.

Specific examples of the diisocyanate compound include 2,4- or 2,6-tolylene diisocyanate, ethylene diisocyanate, propylene diisocyanate, 4,4-diphenylmethane diisocyanate, p-phenylene diisocyanate, tetramethylene diisocyanate, hexamethylene diisocyanate, decamethylene diisocyanate, dodecamethylene diisocyanate, 2,4,4-trimethylhexamethylene-1,6-diisocyanate, phenylene diisocyanate, tolylene or naphthylene diisocyanate, 4,4'-methylene-bis(phenylisocyanate), 2,4'-methylene-bis(phenylisocyanate), 3,4'-methylene-bis(phenylisocyanate), 4,4'-ethylene-bis(phenylisocyanate), ω,ω'-diisocyanate-1,3-dimethyl benzene, ω,ω'-diisocyanate-1,4-dimethyl cyclohexane, ω,ω'-diisocyanate-1,4-dimethyl benzene, ω,ω'-diisocyanate-1,3-dimethyl cyclohexane, 1-methyl-2,4-diisocyanate cyclohexane, 4,4'-methylene-bis(cyclohexylisocyanate), 3-isocyanate-methyl-3,5,5-trimethylcyclohexylisocyanate, acid-diisocyanate dimer, ω,ω'-diisocyanate diethyl benzene, ω,ω'-diisocyanate dimethyl toluene, ω,ω'-diisocyanate diethyl toluene, fumaric acid bis(2-isocyanate ethyl)ester, 1,4-bis(2-isocyanate-prop-2-yl)benzene, and 1,3-bis(2-isocyanate-prop-2-yl)benzene. Examples of the triisocyanate compound include triphenyl methane triisocyanate, dimethyl triphenyl methane tetraisocyanate, and tris(isocyanatephenyl)-thiophosphate.

Further, the modified polyisocyanate compound derived from a diisocyanate compound is not specifically limited it if has two or higher isocyanate groups. Examples thereof include a polyisocyanate having a biurette structure, an isocyanurate structure, a urethane structure, a urethodione structure, an alophanate structure, or a trimer structure, and an adduct of an aliphatic isocyanate with trimethylol propane. Further, polymeric MDI (MDI = diphenyl methane diisocyanate) can be also used as a polyisocyanate compound.

The polyisocyanate compound may be used either singly or in combination of two or more.

Among the polyisocyanate compounds, since the aliphatic polyisocyanate and alicyclic polyisocyanate do not cause any yellowness of a textile product after treatment, they can be particularly preferably used.

From the viewpoint of long lasting water-and-oil repellant property of a functional textile product to be obtained, an alkylene (preferably having 1 to 12 carbon atoms) diisocyanate and a modified polyisocyanate compound derived therefrom are preferable. Examples of the particularly preferred polyisocyanate compound include biurettes, urethodione, or isocyanurates of 1,6-hexamethylene diisocyanate (HDI).

A commercially available product can be used as a polyisocyanate compound. Examples of the commercially available polyisocyanate compound include DURANATE THA-100 (trade name, manufactured by Asahi Kasei Chemicals Corporation) (solid content: 100%) and DURANATE 24A-100 (trade name, manufactured by Asahi Kasei Chemicals Corporation) (solid content: 100%).

Examples of the pyrazole compound represented by the above formula (III), which is used for blocking at least two isocyanate groups of the polyisocyanate compound with an m number of isocyanate groups, include 3,5-dimethyl pyrazole, 3-methylpyrazole, 3,5-dimethyl-4-nitropyrazole, 3,5-dimethyl-4-bromopyrazole, and pyrazole.

The pyrazole compound may be used either singly or in combination of two or more. Among them, from the viewpoint of long lasting water-and-oil repellant property of a functional textile product to be obtained, preferred examples include 3,5-dimethyl pyrazole and 3-methyl pyrazole.

The pyrazole blocked hydrophobic polyisocyanate represented by the formula (I) in which m is 2 can be obtained by blocking all isocyanate groups with the pyrazole compound represented by the formula (III). Further, the pyrazole blocked hydrophobic polyisocyanate represented by the formula (I) in which m is an integer of 3 or more can be obtained by blocking at least two isocyanate groups of the polyisocyanate compound with 3 isocyanate groups or more with the pyrazole compound represented by the formula (III). In this case, from the viewpoint of long lasting water-and-oil repellant property of a functional textile product to be obtained, it is preferable that all the isocyanate groups are blocked with a pyrazole compound. However, remaining isocyanate groups may be blocked with a blocking agent other than the pyrazole compound.

Examples of the blocking agent other than the pyrazole compound include alcohols such as methanol, ethanol, n-propyl alcohol, iso-propyl alcohol, n-butyl alcohol, iso-butyl alcohol, and tert-butyl alcohol; phenols such as phenol, methyl phenol, chlorophenol, p-iso-butylphenol, p-tert-butylphenol, p-iso-amylphenol, p-octylphenol, and p-nonylphenol; active methylene compounds such as dimethyl malonate, diethyl malonate, acetyl acetone, methyl acetoacetate, and ethyl acetoacetate; oximes such as formaldoxime, acetaldoxime, acetone oxime, methyl ethyl ketone oxime, cyclohexanone oxime, acetophenone oxime, and benzophenone oxime; lactams such as ε-caprolactam, δ-valerolactam, and γ-butryolactam; N-substituted amides such as N-methyl acetamide and acetanilide; imide compounds such as succinic imide and phthalimide; and imidazole compounds such as imidazole and 2-methyl imidazole. Those compounds may be used either singly or in combination of two or more. Preferred examples of the blocking agent other than the pyrazole compound include methyl ethyl ketone oxime, from the viewpoint of easy blocking property.

The pyrazole blocked hydrophobic polyisocyanate according to the invention is preferably hydrophobic. However, for the purpose of improving dispersion property in water, it may also contain a non-ionic hydrophilic group having an ethyleneoxy group or an anionic hydrophilic group such as a carboxylate group (COO⁻), a sulfonate group (SO₃⁻), and a phosphonate group (PO₃⁻). As described herein, the expression "pyrazole blocked hydrophobic polyisocyanate is hydrophobic" means that it is not self-dispersed in water. The state of self-emulsion in water indicates that, when the treatment is carried out with 18% by mass aqueous dispersion (200 ml) of blocked isocyanate using T.K. HOMODISPER (manufactured by PRIMIX Corporation) for 10 min at 2000 rpm and room temperature, a homogeneous aqueous dispersion is obtained, and when the aqueous dispersion is added to a glass container and kept at 45°C under sealing, a homogeneously emulsified and dispersed state is maintained for at least 12 hours without having separation or precipitation. When the pyrazole blocked hydrophobic polyisocyanate according to the invention contains a non-ionic hydrophilic group having an ethyleneoxy group, from the viewpoint of having a little effect on the long lasting water-and-oil repellant property of a functional textile product to be obtained, it is preferable that the content ratio of the ethyleneoxy group is 3% by mass or less. Most preferably, it does not contain any ethyleneoxy group. Further, when the pyrazole blocked hydrophobic polyisocyanate according to the invention contains anionic hydrophilic group having a carboxylate group, a sulfonate group, or a phosphonate group, from the viewpoint of having a little effect on the long lasting water-and-oil repellant property of a functional textile product to be obtained, it is preferable that the content ratio of a carboxylate group, a sulfonate group, or a phosphonate group is 1% by mass or less. Most preferably, it does not contain any of them.

The non-ionic hydrophilic group having an ethyleneoxy group is derived by reacting a polyisocyanate compound with a non-ionic hydrophilic compound.

Examples of the non-ionic hydrophilic compound include (poly)ethylene glycols such as ethylene glycol, diethylene glycol, triethylene glycol, and polyethylene glycol; polyoxy (with 2 to 4 carbon atoms) alkylene glycols such as a block polymer or random copolymer of polyethylene glycol, polypropylene glycol, or polytetramethylene glycol or a random copolymer or a block copolymer of ethylene oxide and propylene oxide or ethylene oxide and butylene oxide; polyoxy (with 2 to 4 carbon atoms) alkylene (with 2 to 4 carbon atoms) alkyl ethers in which single terminal of polyoxy (with 2 to 4 carbon atoms) alkylene glycols is blocked with an alkoxy group having 2 to 4 carbon atoms such as polyethylene glycol monomethyl ether, polyethylene glycol monoethyl ether, polyethylene glycol monobutyl ether, polyethylene glycol polypropylene glycol monomethyl ether, and polypropylene glycol polyethylene glycol monobutyl ether; polyoxy (with 2 to 3 carbon atoms) alkylene monoamines such as JEFFAMINE (M series) (manufactured by HUNTSMAN); and polyoxy (with 2 to 3 carbon atoms) alkylene diamines such as JEFFAMINE (D series, ED series, EDR series) (manufactured by HUNTSMAN). The ethyleneoxy group may be continuously included in pyrazole blocked hydrophobic polyisocyanate. Alternatively, it may be included non-continuously.

The anionic hydrophilic group having a carboxylate group, a sulfonate group, or a phosphonate group is derived by reacting a polyisocyanate compound with an anionic hydrophilic compound. Further, the anionic hydrophilic compound may be neutralized at any point, i.e., before the reaction, after the reaction, or during the reaction with the polyisocyanate compound.

Examples of the anionic hydrophilic compound include acids such as aliphatic hydroxycarboxylic acids, aliphatic or aromatic aminocarboxylic acids, aliphatic hydroxysulfonic acids, aliphatic or aromatic aminosulfonic acids, and aliphatic or aromatic aminophosphonic acids.

Examples of the aliphatic hydroxycarboxylic acids include hydroxycarboxylic acids such as hydroxyacetic acid, 3-hydroxypropionic acid, 6-hydroxycaproic acid, 8-hydroxycaprylic acid, and 10-hydroxydecanoic acid, glyceric acid, mevalonic acid, pantoic acid, dimethylol propionic acid, dimethylol butanoic acid, dimethylol acetic acid, dimethylol valeric acid, and dimethylol caproic acid.

Examples of the aliphatic or aromatic aminocarboxylic acids include glycine, N-methylglycine, 2-aminopropanoic acid, 3-aminopropanoic acid, 4-aminobutyric acid, 6-aminocaproic acid, 8-aminocaprylic acid, ornithine, lysine, and 4-aminobenzoic acid.

Examples of the aliphatic hydroxysulfonic acids include 2-hydroxyethane sulfonic acid and 4-hydroxybutane sulfonic acid.

Examples of the aliphatic or aromatic amino sulfonic acids include taurine, N-methyl taurine, N-butyl taurine, sulfanilic acid, 2-(2-aminoethylamino)-ethane sulfonic acid, and 2,4-diamino sulfonic acid.

Examples of the aliphatic or aromatic amino phosphonic acids include aminomethyl phosphonic acid, aminoethyl phosphonic acid, aminopropyl phosphonic acid, and aminophenyl phosphonic acid.

The anionic hydrophilic compound preferably has molecular weight of 500 or less. Further, examples the compound used for neutralization of an anionic hydrophilic compound include, although not specifically limited, amines such as trimethyl amine, triethyl amine, tri-n-propyl amine, tributyl amine, and triethanol amine, potassium hydroxide, sodium hydroxide, potassium carbonate, sodium carbonate, and ammonia.

The non-ionic hydrophilic compound or anionic hydrophilic compound may be used either singly or in combination of two or more.

The isocyanate group other than those blocked with a pyrazole compound represented by the formula (III) may be reacted with a known low molecular weight chain extender, which is a low molecular weight compound having two active hydrogen atoms or more.

Examples of the low molecular weight chain extender having two active hydrogen atoms or more include low molecular weight polyhydric alcohol such as ethylene glycol, propylene glycol (1,2-propanediol), 1,3-propanediol, 1,2-butanediol, 1,3-butylene glycol (1,3-butanediol), 1,4-butanediol, 2,3-butanediol, neopentyl glycol, 2,4,4-trimethyl-1,3-pentanediol, 1,6-hexanediol, cyclohexane diethanol, hydrogenated bisphenol A, trimethylol ethane, trimethylol propane, 1,2,6-hexanetriol, glycerin, pentaerythritol, and sorbitol; and low molecular weight polyamine such as ethylene diamine, propylene diamine, hexamethylene diamine, diaminocyclohexyl methane, piperazine, 2-methylpiperazine, isophorone diamine, diethylene triamine, triethylene tetramine, and hydrazine. Further, a compound having different functional groups such as N-methylethanol amine and N-methylisopropanol amine can be used. The low molecular weight chain extender having two active hydrogen atoms or more preferably has molecular weight of 400 or less, and more preferably 300 or less.

The low molecular weight chain extender may be used either singly or in combination of two or more.

For a case in which the low molecular weight chain extender is used, content ratio of the group introduced by the low molecular weight chain extender is preferably 5% by mass or less in the pyrazole blocked hydrophobic polyisocyanate. When the ratio is more than 5% by mass, dispersion state of the aqueous dispersion of a pyrazole blocked hydrophobic polyisocyanate tends to deteriorate. In addition, for a case in which the low molecular weight chain extender contains an ethyleneoxy group, content ratio of the ethyleneoxy group is preferably 3% by mass or less in the pyrazole blocked hydrophobic polyisocyanate. Most preferably, the low molecular weight chain extender does not contain any ethyleneoxy group.

The pyrazole blocked hydrophobic polyisocyanate represented by the formula (I) can be obtained by, for example, reacting the polyisocyanate compound described above with, as an active hydrogen containing compound, the pyrazole compound represented by the formula (III), and if necessary, other blocking agent, a low molecular weight chain extender, or a hydrophilic compound at pre-determined ratio for several minutes to several days at 20 to 150°C.

The reaction between the polyisocyanate compound and active hydrogen containing compound can be carried out according to a conventionally known one-shot method (single step method) or a multi-step method. In this case, various catalysts for promoting the reaction can be also used. Examples of the catalysts include an organic tin compound, an organic zinc compound, and an organic amine compound.

Further, during any stage of the reaction, an organic solvent which does not react with an isocyanate group may be added.

The pyrazole blocked hydrophobic polyisocyanate according to the invention preferably does not contain a free isocyanate group.

The aqueous dispersion of a pyrazole blocked hydrophobic polyisocyanate according to the invention may contain one or more types of the pyrazole blocked hydrophobic polyisocyanate represented by the formula (I).

The aqueous dispersion of a pyrazole blocked hydrophobic polyisocyanate according to the invention can be obtained by emulsifying and dispersing the pyrazole blocked hydrophobic polyisocyanate represented by the formula (I) in a liquid phase medium containing water with an aid of a non-ionic surface active agent.

Examples of the non-ionic surface active agent include alcohols, polycyclic phenols, amines, amides, fatty acids, polyhydric alcohol fatty acid esters, fats and oils, and alkylene oxide adducts of polypropylene glycol.

Examples of the alcohols include linear or branched alcohol or alkenol having 8 to 24 carbon atoms, and specific examples thereof include octanol, decanol, lauryl alcohol, myristyl alcohol, cetyl alcohol, stearyl alcohol, isostearyl alcohol, behenyl alcohol, oleyl alcohol, linoleyl alcohol, erucyl alcohol, elaidyl alcohol, and palmitoleyl alcohol.

Examples of the polycyclic phenols include monohydric phenols such as phenol, 2-cumyl phenol, 3-cumyl phenol, 4-cumyl phenol, 2-phenyl phenol, 3-phenyl phenol, 4-phenyl phenol, 1-naphthol, 2-naphthol, cresol, butylphenol, octyl phenol, nonyl phenol, and dodecyl phenol; dihydric phenols such as catechol, resorcinol, hydroquinone, bisphenol A, bisphenol F, and bisphenol S; trihydric phenols such as pyrogallol (1,2,3-trihydroxy benzene), and 1,2,4-trihydroxy benzene, phloroglucinol (1,3,5-trihydroxy benzene); tetrahydric phenols such as tetrahydroxy benzene; and phenols such as styrene adduct (styrene, α-methyl styrene, or vinyl toluene) or reaction product with benzyl chloride.

Examples of the amines include linear or branched aliphatic amines having 8 to 44 carbon atoms, and specific example thereof include octyl amine, 2-ethylhexyl amine, coco alkyl amine, decyl amine, lauryl amine, myristyl amine, cetyl amine, stearyl amine, isostearyl amine, behenyl amine, oleyl amine, linoleyl amine, erucyl amine, elaidyl amine, palmitoleyl amine, dicoco alkyl amine, and distearyl amine.

Examples of the amides include linear or branched aliphatic amides having 8 to 44 carbon atoms, and specific example thereof include caprylic amide, caproic amide, lauryl amide, myristyl amide, palmityl amide, stearyl amide, behenyl amide, oleyl amide, and isostearyl amide.

Examples of the fatty acids include linear or branched fatty acids having 8 to 24 carbon atoms, and specific example thereof include caprylic acid, caproic acid, lauric acid, myristic acid, palmitic acid, stearic acid, behenic acid, oleic acid, and isostearic acid.

Examples of the polyhydric alcohol fatty acid esters include a condensation product between polyhydric alcohol and linear or branched fatty acids having 8 to 24 carbon atoms.

Examples of the polyhydric alcohols include glycerin, pentaerythritol, sorbitol, sorbitan, monoethanol amine, diethanol amine, and sugar.

Examples of the fats and oils include plant fats and oils such as soybean oil, sunflower oil, cotton seed oil, rape seed oil, olive oil, castor oil, palm oil, and sesame oil; animal fats and oils such as cow fat, pig fat, shark liver oil, and sperm whale oil; plant waxes such as carnauba wax and candelilla wax; animal waxes such as bee wax and lanolin; mineral waxes such as montan wax; and hydrogenated oils such as hydrogenated cow fats and oils and hydrogenated castor oil.

Among the compounds described above, from the viewpoint of dispersion property and stability of an aqueous dispersion, polycyclic phenols are preferable. (3 to 8 Mole) styrene adduct, (3 to 8 mole) α-methyl styrene adduct, or (3 to 8 mole) benzyl chloride product of phenol, 4-cumyl phenol, 4-phenylphenol, or 2-naphthol is more preferable.

The styrene adduct can be obtained by, for example, reacting phenols with styrenes for 1 to 10 hours at 120 to 150°C. The molar ratio between phenols and styrene is 1 : 1 to 10, and preferably 1 : 3 to 8.

Examples of the alkylene oxide in alkylene oxide adduct include ethylene oxide, 1,2-propylene oxide, 1,2-butylene oxide, 2,3-butylene oxide, 1,4-butylene oxide, styrene oxide, and epichlorohydrin. From the viewpoint of dispersion property and stability of an aqueous dispersion, ethylene oxide and 1,2-propylene oxide are preferred as alkylene oxide. More preferably, it is ethylene oxide.

Examples of the method for adding alkylene oxide include a method of adding ethylene oxide only, a block addition method such as a method of adding ethylene oxide followed by addition of propylene oxide or a method of adding propylene oxide followed by addition of ethylene oxide, and a random addition method such as a method of adding a mixture of ethylene oxide and propylene oxide. Preferably, it is a method of adding ethylene oxide only.

The non-ionic surface active agent can be obtained by adding, at 130 to 170°C, 3 to 200 moles of ethylene oxide to 1 mole of the alcohols, polycyclic phenols, amines, amides, fatty acids, polyhydric alcohol fatty acid esters, fats and oils, or polypropylene glycol.

Molar addition number of the alkylene oxide is preferably 3 to 200. More preferably, it is 10 to 100, and still more preferably 10 to 50. When molar addition number of the alkylene oxide is less than 3 moles, emulsification stability of the aqueous dispersion of pyrazole blocked hydrophobic isocyanate tends to deteriorate. On the other hand, when it is more than 200 moles, the water-and-oil repellant property of the functional textile product tends to deteriorate.

From the viewpoint of obtaining a favorable aqueous dispersion, the non-ionic surface active agent preferably has HLB of 10 or more. In this case, one kind of the non-ionic surface active agent having HLB of 10 or more can be used, or two active agents or more can be used such that HLB becomes 10 or more. The non-ionic surface active agent preferably has HLB of 13 or more. More preferably, it has HLB of 15 or more. When HLB is less than 10, the effect of emulsifying and dispersing the pyrazole blocked hydrophobic polyisocyanate compound tends to decrease. As used herein, the term HLB indicates the HLB based on Griffin scale, and the hydrophilic group indicates an ethyleneoxy group.

In the aqueous dispersion of a pyrazole blocked hydrophobic polyisocyanate according to the invention, one or more types of the non-ionic surface active agent may be included.

According to the invention, for the purpose of improving stability of the aqueous dispersion of a pyrazole blocked hydrophobic polyisocyanate according to the invention, an anionic surface active agent or a cationic surface active agent may be used in combination.

The anionic surface active agent which may be used in combination is not specifically limited, and examples thereof include anionic product of linear or branched alcohol or alkenol having 8 to 24 carbon atoms, anionic product of alkylene oxide adduct of linear or branched alcohol or alkenol having 8 to 24 carbon atoms, anionic product of alkylene oxide adduct of polycyclic phenols, anionic product of alkylene oxide adduct of linear or branched aliphatic amine having 8 to 44 carbon atoms, anionic product of alkylene oxide adduct of linear or branched aliphatic amide having 8 to 44 carbon atoms, and anionic product of alkylene oxide adduct of linear or branched fatty acid having 8 to 24 carbon atoms. The anionic surface active agent may be used either singly or in combination of two or more.

The cationic surface active agent which may be used in combination is not specifically limited, and examples thereof include monoalkyl trimethyl ammonium salt having 8 to 24 carbon atoms, dialkyl dimethyl ammonium salt having 8 to 24 carbon atoms, monoalkylamine acetate salt having 8 to 24 carbon atoms, dialkylamine acetate salt having 8 to 24 carbon atoms, and alkyl imidazoline quaternary salt having 8 to 24 carbon atoms. The cationic surface active agent may be used either singly or in combination of two or more.

The addition ratio (on the basis of mass) between the non-ionic surface active agent (A) and the anionic surface active agent (B) is in the range of (A) : (B) = 50 : 50 to 100 : 0, and preferably in the range of 90 : 10 to 100 : 0. When the addition amount of anionic surface active agent is higher than 50 parts by mass compared to 50 parts by mass of non-ionic surface active agent, there is a tendency that miscibility with a water-and-oil repellant component is deteriorated or wash durability is deteriorated.

The addition ratio (on the basis of mass) between the non-ionic surface active agent (A) and the cationic surface active agent (C) is in the range of (A) : (C) = 50 : 50 to 100 : 0, and preferably in the range of 90 : 10 to 100 : 0. When the addition amount of cationic surface active agent is higher than 50 parts by mass compared to 50 parts by mass of non-ionic surface active agent, there is a tendency that or wash durability is deteriorated.

The addition ratio (on the basis of mass) between the pyrazole blocked hydrophobic polyisocyanate according to the invention and the non-ionic surface active agent is preferably in the range 100 : 50 to 100 : 1, and more preferably in the range of 100 : 20 to 100 : 1. When the addition amount of non-ionic surface active agent is higher than 50 parts by mass compared to 100 parts by mass of pyrazole blocked hydrophobic polyisocyanate, there is a tendency that wash durability is deteriorated. On the other hand, when it is less than 1 part by mass, there is a tendency that stability is deteriorated when admixed with a water-and-oil repellant component.

In the aqueous dispersion of a pyrazole blocked hydrophobic polyisocyanate according to the invention, the content of the non-ionic surface active agent is preferably 0.1 to 10% by mass, and more preferably 0.5 to 5% by mass. When it is lower than 0.1 % by mass, there is a tendency that the aqueous dispersion cannot be obtained in good state. On the other hand, when it is more than 10% by mass, decrease in water repellant property may be caused.

Examples of the liquid phase medium other than water, which yields a separate layer when admixed with water, include at least one organic solvent selected from a group consisting of ketones, esters, ethers, aromatic hydrocarbons, and aliphatic hydrocarbons. Those having a lower solubility in water and a lower density are preferable. For example, those having a density of 1.00 g/cm³ or less (20°C) and a water solubility of 25 g/100 ml or less (20°C) are preferable.

Examples of the organic solvent include ketones such as methyl isobutyl ketone (0.801 g/cm³ (20°C), solubility: 1.91 g/100 ml (20°C)); esters such as ethyl acetate (density: 0.897 g/cm³, solubility: 8.3 g/100 ml (20°C)), butyl acetate (density: 0.88 g/cm³, solubility: 0.83 g/100 ml (25°C)), and butyl glycol acetate (density: 0.94 g/cm³, solubility: 1.1 g/100 ml (20°C)); ethers such as ethyl ether (density: 0.713 g/cm³, solubility: 6.9 g/100 ml (20°C)), dibutyl diglycol (diethylene glycol dibutyl ether) (density: 0.884 g/cm³, solubility: 0.3 g/100 ml (20°C)), diethylene glycol mono-2-ethylhexyl ether (density: 0.923 g/cm³, solubility: 0.3 g/100 ml (20°C)), ethylene glycol monohexyl ether (density: 0.889 g/cm³, solubility: 0.99 g/100 ml (20°C)), diethylene glycol monohexyl ether (density: 0.935 g/cm³, solubility: 1.7 g/100 ml (20°C)), ethylene glycol mono-2-ethylhexyl ether (density: 0.883 g/cm³, solubility: 0.2 g/100 ml (20°C)), dipropylene glycol monopropyl ether (density: 0.923 g/cm³, solubility: 4.8 g/100 ml (20°C)), propylene glycol monobutyl ether (density: 0.880 g/cm³, solubility: 6.4 g/100 ml (20°C)), and dipropylene glycol monobutyl ether (density: 0.917 g/cm³, solubility: 3.0 g/100 ml (20°C)); aromatic hydrocarbons such as toluene (density: 0.867 g/cm³, solubility: 0.47 g/l (20°C)), o-xylene (density: 0.88 g/cm³, insoluble in water), m-xylene (density: 0.86 g/cm³, insoluble in water), p-xylene (density: 0.86 g/cm³, insoluble in water), and mesitylene (density: 0.86 g/cm³, insoluble in water); hydrocarbons containing cycles with 6 to 12 carbon atoms such as cyclohexane (density: 0.8 g/cm³, hardly soluble in water) and cyclooctane (density: 0.834 g/cm³, solubility: 7.90 mg/l); and fluid paraffins. The organic solvent may be used either singly or in combination of two or more.

By using the aforementioned organic solvent in combination, micornization effect can be improved at the time of dispersion. Further, by using an organic solvent in combination, viscosity is lowered, and therefore dispersion can be achieved even with a small shear force. If the viscosity is low, it is also possible to use various emulsifying disperser. Further, the organic solvent having low density such as those described above can provide an effect of preventing precipitation of emulsion and improving stability of an aqueous dispersion when used in combination with water. When an organic solvent which does not yield a separate layer at the time of mixing with water, or an organic solvent causing little separation when admixed with water is used, there is a tendency that the effect of emulsifying and dispersing the pyrazole blocked hydrophobic polyisocyanate compound is decreased.

According to the invention, from the viewpoint of storage stability and chemical incorporation stability of the water-and-oil repellant composition, the liquid phase medium of the aqueous dispersion of a pyrazole blocked hydrophobic polyisocyanate is a mixture containing water and ethers. In particular, when dibutyl diglycol or diethylene glycol mono-2-ethylhexyl ether is used as ether, the storage stability and chemical incorporation stability of a water-and-oil repellant composition are improved. As described herein, the chemical incorporation stability means the stability of a treatment bath containing a water-and-oil repellant composition when a chemical other than the water-and-oil repellant composition is applied to a substance to be treated and incorporated to the treatment bath containing a water-and-oil repellant composition. Examples of the chemical other than the water-and-oil repellant composition include a fixing agent, a dispersion agent, a leveling agent, a pH controlling agent, inorganic salts, a scouring agent, and an RC agent.

Use amount of the organic solvent is preferably 100 : 20 to 300 in terms of addition ratio (on the basis of mass) between the pyrazole blocked hydrophobic polyisocyanate compound and organic solvent. More preferably it is 100 : 50 to 200. When the use amount of the organic solvent is less than 20 parts by mass per 100 parts by mass of the pyrazole blocked hydrophobic polyisocyanate, there is a tendency that a good aqueous dispersion is difficult to obtain. On the other hand, when it is more than 300 parts by mass, it is necessary to use a large amount of a surface active agent, and therefore it is disadvantageous in terms of performance and economic point of view. The use amount of water is preferably 100 : 30 to 1000 in terms of addition ratio (on the basis of mass) between the pyrazole blocked hydrophobic polyisocyanate compound and water. More preferably it is 100 : 50 to 700. When use amount of water is less than 30 parts by mass per 100 parts by mass of the pyrazole blocked hydrophobic polyisocyanate, the viscosity increases, resulting in poor developability in water. On the other hand, when it is more than 1000 parts by mass, there is a tendency that a good aqueous dispersion is difficult to obtain.

The aqueous dispersion of a pyrazole blocked hydrophobic polyisocyanate according to the invention can be produced as follows, for example.

When the pyrazole blocked hydrophobic polyisocyanate represented by the formula (I) is dissolved in an organic solvent (for example, toluene, methyl isobutyl ketone, butyl glycol acetate, dibutyl diglycol, diethylene glycol mono-2-ethylhexyl ether, or the like), the aforementioned non-ionic surface active agent (for example, 30 moles ethylene oxide adduct of tristyene phenol) is dissolved therein, and water is slowly added to the mixture under stirring, and thus an aqueous dispersion can be prepared.

The obtained aqueous dispersion may be subjected to particle homogenization using a high pressure emulsifying apparatus such as Homomixer (manufactured by PRIMTX Corporation), Homogenizer (manufactured by NIRO SOAVI) or (manufactured by APV GAULIN), Nanomizer (manufactured by Yoshida Kikai Co., Ltd.), Altimizer (manufactured by SUGINO MACHINE LIMITED), or Starburst (manufactured by SUGINO MACHINE LIMITED).

The organic solvent may be removed by distillation under reduced pressure either during the production of after production of an aqueous dispersion. It may be also left as it is.

The average particle diameter of the particles in the obtained aqueous dispersion is preferably 1 µm or less. More preferably, it is 0.5 µm or less. When it is more than 1 µm, there is a tendency that the stability of the aqueous dispersion of a pyrazole blocked hydrophobic polyisocyanate is deteriorated. The average particle diameter is measured by laser diffraction type/scattering type particle size distribution analyzer LA-920 (manufactured by HORIBA, Ltd.) and the particle diameter showing percentage integrated value of 50% (i.e., median particle diameter) is taken as an average particle diameter (µm).

The aqueous dispersion of a pyrazole blocked hydrophobic polyisocyanate according to the invention is preferably in emulsified and dispersed state. As described herein, the emulsified and dispersed state indicates a state showing even aqueous dispersion when 200 ml of a 20% by mass aqueous dispersion that is prepared with the ratio described in the preparation examples given below is treated for 10 min at 2000 rpm at room temperature by using T.K.HOMODISPER (trade name, manufactured by PRIMIX Corporation) and, when the aqueous dispersion is sealed in a glass container and kept at 45°C, an evenly emulsified and dispersed state is maintained for 12 hours or more without any separation, precipitation, or the like. It is preferable to suitably select the combination of the pyrazole blocked hydrophobic polyisocyanate, non-ionic surface active agent, and a liquid phase medium for aqueous dispersion to obtain such emulsified and dispersed state.

Examples of the water-and-oil repellant component having a perfluoroalkyl group with 6 carbon atoms or less that is used in the invention include those described in the following (i) to (vi).

(i) Copolymer of acrylate and/or methacrylate having a perfluoroalkyl group with 6 carbon atoms or less with other monomer copolymerizable with them.

Carbon atom number of the perfluoroalkyl group in the acrylate and/or methacrylate for constituting the copolymer is preferably 3 to 6. Examples of the acrylate and methacrylate having a perfluoroalkyl group include the compounds described below.
CF₃(CF₂)₄CH₂OCOC(CH₃)=CH₂
CF₃(CF₂)₂CH₂CH₂OCOC(CH₃)=CH₂
CF₃(CF₂)₃CH₂CH₂OCOC(CH₃)=CH₂
CF₃(CF₂)₄CH₂CH₂OCOC(CH₃)=CH₂
CF₃(CF₂)₅CH₂CH₂OCOC(CH₃)=CH₂
CF₃(CF₂)₂CH₂CH₂OCOCH=CH₂
CF₃(CF₂)₃CH₂CH₂OCOCH=CH₂
CF₃(CF₂)₄CH₂CH₂OCOCH=CH₂
CF₃(CF₂)₅CH₂CH₂OCOCH=CH₂
CF₃(CF₂)₅(CH₂)₂O(CH₂)₂OCOCH=CH₂
CF₃CF₂CH₂CH(OH)CH₂OCH₂CH₂OCOCH=CH₂
(CF₃)₂CF(CF₂)₃CH₂CH₂OCOCH=CH₂
CF₃(CF₂)₅SO₂N(C₃H₇)CH₂CH₂OCOCH=CH₂
CF₃(CF₂)₅(CH₂)₄OCOCH=CH₂
CF₃(CF₂)₅SO₂N(CH₃)CH₂CH₂OCOC(CH₃)=CH₂
CF₃(CF₂)₅SO₂N(C₂H₅)CH₂CH₂OCOCH=CH₂
CF₃(CF₂)₅CONHCH₂CH₂OCOCH=CH₂
(CF₃)₂CF(CF₂)₃CH₂CH₂CH₂OCOCH=CH₂
(CF3)₂CF(CF₂)₃CH₂CH(OCOCH₃)CH₂OCOC(CH₃)=CH₂
(CF₃)₂CF(CF₂)₃CH₂CH(OH)CH₂OCOCH=CH₂
CF₃(CF₂)₅CONHCH₂CH₂OCOC(CH₃)=CH₂
CF₃CF(CF₂Cl)(CF₂)₃CONHCH₂CH₂OCOCH=CH₂
CF₃CF(CF₂Cl)(CF₂)₃CONHCH₂CH₂OCOC(CH₃)=CH₂
H(CF₂)₆CH₂OCOCH=CH₂
CF₂Cl(CF₂)₅CH₂OCOC(CH₃)=CH₂
C₆F₁₃CH=CH₂

Examples of the other monomer which is copolymerizable with acrylate and/or methacrylate having a perfluoroalkyl group include acrylic acid or methacrylic acid ester such as lauryl acrylate, lauryl methacrylate, stearyl acrylate, stearyl methacrylate, benzyl acrylate, benzyl methacrylate, glycidyl acrylate, glycidyl methacrylate, aziridinyl acrylate, aziridinyl methacrylate, hydroxyalkyl acrylate, hydroxyalkyl methacrylate, 3-chloro-2-hydroxypropyl methacrylate, alkylene diol acrylate, and alkylene diol dimethacrylate, acrylamide or methacrylamide such as acrylamide, methacrylamide, N-methylol acrylamide, N-methylol methacrylamide, diacetone acrylamide, diacetone methacrylamide, and methylolated diacetone acrylamide, maleic acid alkyl ester such as dibutyl maleate, phthalic acid alkyl ester, vinyl chloride, vinylidene chloride, ethylene, vinyl acetate, styrene, α-methyl styrene, β-methyl styrene, alkyl vinyl ether, halogenated alkyl vinyl ether, alkyl vinyl ketone, cyclohexyl acrylate, cyclohexyl methacrylate, maleic anhydride, butadiene, isoprene, and chloroprene.

With respect to the mass ratio between the acrylate and/or methacrylate having a perfluoroalkyl group and other monomer which is copolymerizable with them, total amount of the acrylate and/or methacrylate having a perfluoroalkyl group is preferably 40% by mass or more, and more preferably 50 to 80% by mass in the entire monomers used for copolymerization.

The copolymers may be produced according to any known vinyl polymerization method. However, those produced by emulsifying polymerization are preferable.

Medium for emulsifying polymerization is not particularly limited. However, it is preferable to use an aqueous solvent in which a water soluble organic solvent is added to water. When an aqueous solvent in which a water soluble organic solvent is added to water is used, the monomer or copolymer does not easily aggregate, and therefore a stable emulsion can be obtained. The emulsifying agent used for emulsifying polymerization is not specifically limited. In fact, almost any emulsifying agent including non-ionic, anionic, cationic, and amphoteric emulsifying agent can be used. For emulsifying polymerization, it is preferable that the acrylate and/or methacrylate having a perfluoroalkyl group, other monomer which is copolymerizable with them, an emulsifying agent or the like are added to an aqueous solvent, the monomer mixture is emulsified and dispersed by applying ultrasonic wave under stirring, and the polymerization is carried out under heating after adding a water soluble polymerization initiator. The water soluble polymerization initiator that may be used is not specifically limited. Examples thereof include various polymerization initiators such as organic peroxides, an azo compound, and persulfate salts. Further, ionizing radiation ray such as γ ray may be used instead of a polymerization initiator.

(ii) (Poly)esters of a monohydric or polyhydric alcohol having a perfluoroalkyl group with 6 carbon atoms or less and monohydric or polyhydric carboxylic acid which may be fluorinated, and (poly)esters of a monohydric or polyhydric alcohol which may be fluorinated and monohydric or polyhydric carboxylic acid having a perfluoroalkyl group with 6 carbon atoms or less.

(iii) Fluorinated polyester copolymer as disclosed in JP-A No. Sho 58-103550.

(iv) (Poly)urethane of a monohydric or polyhydric alcohol having a perfluoroalkyl group with 6 carbon atoms or less (depending on specific case, it may be mixed with a monohydric or polyhydric alcohol containing no fluorine) and monohydric or polyhydric isocyanate.

The (poly)urethane preferably has molecular weight of 700 or more.

(v) A compound having a group capable of reacting with isocyanate (e.g., a hydroxy group, an amino group, and a carboxy group) and a perfluoroalkyl group with 6 carbon atoms or less.

Examples of the aforementioned compound include C₆F₁₃CH₂CH₂OH, C₆F₁₃SO₂N(CH₃)CH₂CH₂OH, C₆F₁₃SO₂N(CH₂CH₃)CH₂CH₂OH, C₆Fl₃COOH, C₆F₁₃CONHC₃H₆NHCH₃, and C₆F₁₃SO₂NHCH₃.

(vi) Fluorine containing aliphatic polycarbonate having a perfluoroalkyl group with 6 carbon atoms or less.

The compounds described in the above (ii) to (vi) are preferably used in an emulsified and dispersed state by using an emulsifying agent.

The addition ratio of the aqueous dispersion of a pyrazole blocked hydrophobic polyisocyanate according to the invention and a water-and-oil repellant component having a perfluoroalkyl group with 6 carbon atoms or less in the water-and-oil repellant composition of the invention is preferably set such that the pyrazole blocked hydrophobic polyisocyanate represented by the formula (I) is 5 to 100 parts by mass per 100 parts by mass of the water-and-oil repellant component. When the ratio of the pyrazole blocked hydrophobic polyisocyanate is less than 5 parts by mass per 100 parts by mass of the water-and-oil repellant component, it may be difficult to obtain wash durability at sufficient level. On the other hand, when the ratio of the pyrazole blocked hydrophobic polyisocyanate is more than 100 parts by mass per 100 parts by mass of the water-and-oil repellant component, the effect corresponding to the use amount is not obtained and, as the water-and-oil repellant property is deteriorated, it may be disadvantageous from the economical point of view.

To the water-and-oil repellant composition of the invention, a flame retardant, a dye stabilizing agent, a wrinkle protecting agent, an antimicrobial agent, an antifungal agent, an insect-repelling agent, an antifouling agent, an antistatic agent, an aminoplast resin, an acrylic polymer, a glyoxal resin, a melamine resin, natural wax, a silicone resin, a thickening agent, and a polymer compound or the like may be added to the extent that the effect of the invention is not negatively affected.

The water-and-oil repellant composition of the invention may be a single liquid type in which the aqueous dispersion of a pyrazole blocked hydrophobic polyisocyanate according to the invention and a water-and-oil repellant component having a perfluoroalkyl group with 6 carbon atoms or less are prepared in a single liquid. Alternatively, it may be a two-liquid type in which each of them is separately present as liquid A and liquid B. In case of a two-liquid type, two liquids may be mixed with each other when a treatment liquid for treating a textile substrate is prepared. It is also possible that the treatment liquid containing liquid A and the treatment liquid containing liquid B are prepared separately and used together for treatment of a textile substrate.

For example, by contacting a textile substrate with the treatment liquid A containing an aqueous dispersion of a pyrazole blocked hydrophobic polyisocyanate which contains the pyrazole blocked hydrophobic polyisocyanate represented by the formula (I) and a non-ionic surface active agent and the treatment liquid B containing a water-and-oil repellant component having a perfluoroalkyl group with 6 carbon atoms or less, or contacting it with the treatment liquid C containing an aqueous dispersion of a pyrazole blocked hydrophobic polyisocyanate which contains the pyrazole blocked hydrophobic polyisocyanate represented by the formula (I) and a non-ionic surface active agent and a water-and-oil repellant component having a perfluoroalkyl group with 6 carbon atoms or less, a functional textile product having a water-and-oil repellant property can be prepared.

The treatment liquid C can be prepared by, for example, adding the aqueous dispersion of a pyrazole blocked hydrophobic polyisocyanate according to the invention to a liquid containing a water-and-oil repellant component. Further, the addition order or method of adding the aqueous dispersion of a pyrazole blocked hydrophobic polyisocyanate and water-and-oil repellant component can be any order or method.

When the treatment is carried out by using the treatment liquid A and treatment liquid B, it may be carried out in a separate bath or in the same bath. There is no limit for the treatment order and addition timing. For example, a textile substrate may be first treated with the treatment liquid A followed by treatment with the treatment liquid B. Alternatively, it may be first treated with the treatment liquid B followed by treatment with the treatment liquid A.

For both cases of performing the treatment using single liquid type or two-liquid type, the aforementioned low molecular weight chain extender may be added to a treatment bath. For such case, the use amount of low molecular weight chain extender can be suitably adjusted in consideration of the performance of a functional textile product to be obtained. However, from the viewpoint of texture of a functional textile product, it is preferably 5% by mass or less on the basis of the mass of the pyrazole blocked hydrophobic polyisocyanate. However, when the low molecular weight chain extender contains an ethyleneoxy group in the molecule, it is preferable to use the extender such that the ethyleneoxy group is 3% by mass or less of the pyrazole blocked hydrophobic polyisocyanate. It is preferable that the low molecular weight chain extender does not absolutely contain ethyleneoxy group.

The processing of a textile substrate with the water-and-oil repellant composition of the invention is not particularly limited. For example, it may be performed by a padding method, an impregnation method, a spray method, or a coating method. Among them, the padding method may be preferably used.

For example, after impregnating a textile substrate in a treatment liquid and adjusting it to have a pre-determined pick up amount by using a mangle or the like, it may be preferably dried at the temperature of 100°C or higher. If necessary, after drying, by performing a heating treatment (that is, curing) for 10 seconds to 10 minutes, or preferably for 30 seconds to 3 minutes at the temperature of 100°C or higher, or preferably at the temperature of 110 to 180°C, a functional textile product having good durability may be obtained. When the treatment is performed with two-liquid type including the treatment liquid A and treatment liquid B, the treated textile substrate may be dried at the temperature of 100°C or higher after the first treatment.

According to the heating treatment, the pyrazole blocked isocyanate group is converted into a highly active -N=C=O group, and due to its high reactivity, the strength, adhesion property, and durability of a water-and-oil repellant coating film that is formed on a textile substrate are improved.

The textile substrate may be either a textile product or a textile material constituting a textile product. Materials of a textile substrate include, for example, natural fibers such as a cotton, a kapok, a linen, a ramie, a hemp, a jute, a Manila hemp, a saisal hemp, a wool, a cashmere, a mohair, an alpaca, a camel fur, a silk, and a feather, regenerated fibers such as rayon, polynosic, cupra, and tencel, semi-synthetic fibers such as cellulose acetate fibers and promix, synthetic fibers such as polyamide fibers, polyester fibers, acryl fibers, polyolefin fibers, polyvinyl alcohol fibers, polyvinyl chloride fibers, polyurethane fibers, polyoxymethylene fibers, polytetrafluoroethylene fibers, benzoate fibers, polyparaphenylene benzbisthiazole fibers, polyparaphenylene benzbisoxazole fibers, and polyimide fibers, inorganic fibers such as gypsum, glass fibers, carbon fibers, alumina fibers, silicon carbide fibers, boron fibers, tirano fibers, inorganic whiskers, rock fibers, and slag fibers, composite fibers and mixed fibers thereof

A type of the textile substrate is not specifically limited, and examples thereof may include yarn, fabric, knitted fabric, non-woven fabric, and artificial paper. According to the invention, a textile substrate coated or laminated with a urethane resin or an acryl resin may be also subjected to the treatment.

To the treatment liquids A to C described above, a flame retardant, a dye stabilizing agent, a wrinkle protecting agent, an antimicrobial agent, an antifungal agent, an insect-repelling agent, an antifouling agent, an antistatic agent, an aminoplast resin, an acrylic polymer, a glyoxal resin, a melamine resin, natural wax, a silicone resin, a thickening agent, a polymer compound, or the like may be added to the extent that the effect of the invention is not negatively affected. In addition, either before or after the treatment according to the invention, the textile substrate may be treated with a separate treatment liquid containing the above chemicals.

As compared with a water-and-oil repellant component having a perfluoroalkyl group with 8 carbon atoms or more, the water-and-oil repellant component having a perfluoroalkyl group with 6 carbon atoms or less has inferior long lasting water-and-oil repellant property when it is used in combination with a blocked polyisocyanate. In this regard, by using it in combination with an aqueous dispersion of a pyrazole blocked hydrophobic polyisocyanate according to the invention, it is possible that the water-and-oil repellant component having a perfluoroalkyl group with 6 carbon atoms or less have a long lasting water-and-oil repellant property which is equivalent to that of a water-and-oil repellant component having a perfluoroalkyl group with 8 carbon atoms or more. For this reason, it is believed by the inventors of the invention that, as the aqueous dispersion of a pyrazole blocked hydrophobic polyisocyanate according to the invention can be present in a good emulsion and dispersion state, the pyrazole blocked hydrophobic polyisocyanate according to the invention can be evenly adhered onto a textile substrate, and also, as the pyrazole group has lower dissociation temperature than other blocking groups, the isocyanate group is exhibited even at a low temperature to yield high reactivity.

Further, when the pyrazole blocked polyisocyanate contains a great amount of hydrophilic groups, the water-repellant property is not obtained at sufficient level. Further, when precipitation, separation, or the like of the pyrazole blocked hydrophobic polyisocyanate occurs in the treatment liquid, it is also difficult to obtain the long lasting water-and-oil repellant property at sufficient level.

### Examples

Hereinafter, the invention will be described in more detail by means of Examples, but it is evident that the invention is not limited to Examples.

### <Preparation of isocyanate raw material>

As an isocyanate, a raw material for synthesizing blocked polyisocyanate, the following compounds were prepared.
DURANATE THA-100: an isocyanurate type of hexamethylene diisocyanate, the number of NCO functional group: 3, manufactured by Asahi Kasei Chemicals Corporation, Trade name, Content: 100%.
DURANATE 24A-100: a biurette type of hexamethylene diisocyanate, the number of NCO functional group: 3, manufactured by Asahi Kasei Chemicals Corporation, Trade name, Content: 100%.

### <Preparation of organic solvent>

As an organic solvent for preparing an aqueous dispersion of blocked polyisocyanate, the following solvents were prepared.
A hydrophobic organic solvent: butyl glycol acetate (Density: 0.94 g/cm³, and Solubility: 1.1 g/100 ml (20°C)), dibutyl diglycol (diethylene glycol dibutyl ether) (Density: 0.884 g/cm³, and Solubility: 0.3 g/100 ml (20°C)).
A hydrophilic organic solvent: tripropylene glycol (Density: 1.02 g/cm³, and Freely soluble in water (20°C)), methyl ethyl ketone (Density: 0.805 g/cm³, and Solubility: 29 g/100 ml (20°C)).

### <Synthesis of blocked polyisocyanate>

### (Synthetic Example 1: pyrazole blocked hydrophobic polyisocyanate)

To a reaction vessel, 252 parts by mass of DURANATE THA-100 and 5 parts by mass of methyl isobutyl ketone were added and heated to 60 to 70°C. Subsequently, 144 parts by mass of 3,5-dimethyl pyrazole were slowly added and reacted at 60 to 70°C until the content of isocyanate, which is determined by an infrared spectrophotometer, becomes zero. As a result, a colorless, transparent, and viscous liquid phase composition containing 98.8% by mass of a pyrazole blocked hydrophobic polyisocyanate compound was obtained.

### (Synthetic Example 2: pyrazole blocked hydrophobic polyisocyanate)

To a reaction vessel, 239 parts by mass of DURANATE 24A-100 and 5 parts by mass of methyl isobutyl ketone were added and heated to 60 to 70°C. Subsequently, 144 parts by mass of 3,5-dimethyl pyrazole were slowly added and reacted at 60 to 70°C until the content of isocyanate, which is determined by an infrared spectrophotometer, becomes zero. As a result, a colorless, transparent, and viscous liquid phase composition containing 98.7% by mass of a pyrazole blocked hydrophobic polyisocyanate compound was obtained.

### (Synthetic Example 3: pyrazole blocked hydrophobic polyisocyanate containing methyl ethyl ketooxime)

To a reaction vessel, 252 parts by mass of DURANATE THA-100 and 5 parts by mass of methyl isobutyl ketone were added and heated to 60 to 70°C. Subsequently, 43.5 parts by mass of methyl ethyl ketooxime were added dropwisely thereto followed by further dropwisely addition of 96 parts by mass of 3,5-dimethyl pyrazole and reacted at 60 to 70°C until the content of isocyanate, which is determined by an infrared spectrophotometer, becomes zero. As a result, a colorless, transparent, and viscous liquid phase composition containing 98.7% by mass of a pyrazole blocked hydrophobic polyisocyanate compound was obtained.

### (Synthetic Example 4: pyrazole blocked hydrophobic polyisocyanate containing 3% by mass of ethyleneoxy group)

To a reaction vessel, 252 parts by mass of DURANATE THA-100 and 5 parts by mass of methyl isobutyl ketone were added and heated to 60 to 70°C. Subsequently, 109.6 parts by mass of 3,5-dimethyl pyrazole were added dropwisely thereto followed by stirring for 1 hour. Further, 11.1 parts by mass of ethylene glycol were added dropwisely thereto and the reaction was performed at 60 to 70°C until the content of isocyanate, which is determined by an infrared spectrophotometer, becomes zero. As a result, a colorless, transparent, and viscous liquid phase composition containing 98.7% by mass of a pyrazole blocked hydrophobic polyisocyanate compound was obtained.

### (Synthetic Example 5: pyrazole blocked hydrophobic polyisocyanate containing 1% by mass of carboxylate group (COO-))

To a reaction vessel, 252 parts by mass of DURANATE THA-100 and 5 parts by mass of methyl isobutyl ketone were added and heated to 60 to 70°C. Subsequently, 127.2 parts by mass of 3,5-dimethyl pyrazole were added dropwise thereto followed by stirring for 1 hour. Further, 11.7 parts by mass of dimethylol propionic acid were added dropwise thereto and the reaction was performed at 60 to 70°C until the content of isocyanate, which is determined by an infrared spectrophotometer, becomes zero. After that, according to neutralization with 10.2 parts by mass of 2-(dimethylamino)-2-methyl-1-propanol, a colorless, transparent, and viscous liquid phase composition containing 98.8% by mass of a pyrazole blocked hydrophobic polyisocyanate compound was obtained.

### (Comparative Synthetic Example 1: methyl ethyl ketooxime blocked polyisocyanate)

To a reaction vessel, 252 parts by mass of DURANATE THA-100 and 5 parts by mass of methyl isobutyl ketone were added and heated to 60 to 70°C. Subsequently, 130.5 parts by mass of methyl ethyl ketooxime were slowly added and reacted at 60 to 70°C until the content of isocyanate, which is determined by an infrared spectrophotometer, becomes zero. As a result, a colorless, transparent, and viscous liquid phase composition containing 98.7% by mass of a methyl ethyl ketooxime blocked polyisocyanate compound was obtained.

### (Comparative Synthetic Example 2: pyrazole blocked hydrophilic polyisocyanate containing 11.4% by mass of ethyleneoxy group)

To a reaction vessel, 252 parts by mass of DURANATE THA-100 and 5 parts by mass of methyl isobutyl ketone were added and heated to 60 to 70°C. Subsequently, 50 parts by mass of polyethylene glycol monomethyl ether (average molar addition number for ethylene oxide: 12) were added slowly thereto followed by stirring for 1 hour. Further, 135.5 parts by mass of 3,5-dimethyl pyrazole were added slowly thereto and the reaction was performed at 60 to 70°C until the content of isocyanate, which is determined by an infrared spectrophotometer, becomes zero. As a result, a colorless, transparent, and viscous liquid phase composition containing 98.9% by mass of a pyrazole blocked hydrophilic polyisocyanate compound was obtained.

### <Synthesis of surface active agent>

### (Synthetic Example 6: 5 moles ethylene oxide adduct of stearyl alcohol (HLB = 9.0), herein below, abbreviated as "St5E")

270 Parts by mass (1 mole) of stearyl alcohol and 3.0 parts by mass of caustic soda were added to an autoclave. After raising the temperature to about 130°C by heating, 220 parts by mass (5 mole) of ethylene oxide were added and the reaction was performed at the temperature of 155 to 165°C and a pressure of 0.39 MPa or less. When the alkylene oxide addition reaction is completed, the mixture was cooled and neutralized to pH 7 with glacial acetic acid to obtain a non-ionic surface active agent as a pale yellow solid.

### (Synthetic Example 7: 10 moles ethylene oxide adduct of stearyl alcohol (HLB = 12.4), herein below, abbreviated as "St10E")

The synthesis was performed in the same manner as Synthetic Example 6 except that the ethylene oxide addition molar number is changed to 10 moles. As a result, a non-ionic surface active agent was obtained as a pale yellow solid.

### (Synthetic Example 8: 28 moles ethylene oxide adduct of stearyl alcohol (HLB = 16.4), herein below, abbreviated as "St28E")

The synthesis was performed in the same manner as Synthetic Example 6 except that the ethylene oxide addition molar number is changed to 28 mole. As a result, a non-ionic surface active agent was obtained as a pale yellow solid.

### (Synthetic Example 9: 30 moles ethylene oxide adduct of tristyrene phenol (HLB = 15.3), herein below, abbreviated as "T30E")

47 Parts by mass (0.5 moles) of phenol and 0.1 parts by mass of sulfuric acid were added to a reaction vessel. After stirring, 47 parts by mass (0.5 moles) of phenol was further added and the temperature was raised to about 80°C by heating under nitrogen gas stream. After further heating, 312 parts by mass (3 moles) of styrene monomer was added dropwisely thereto at 105 to 135°C and the addition reaction was performed for about 3 hours at 125 to 135°C followed by cooling. As a result, tristyrene phenol was obtained as a brown and transparent viscous liquid phase.

406 parts by mass (1 mole) of the obtained tristyrene phenol and 3.5 parts by mass of caustic soda were added to an autoclave. After raising the temperature to about 130°C by heating, 1320 parts by mass (30 moles) of ethylene oxide was added and the reaction was performed at the temperature of 155 to 165°C and a pressure of 0.39 MPa or less. When the alkylene oxide addition reaction is completed, the mixture was cooled and neutralized to pH 7 with glacial acetic acid to obtain a non-ionic surface active agent as a pale yellow solid.

### <Synthesis of water-and-oil repellant component>

### (Synthetic Example 10: water-and-oil repellant component having a perfluoroalkyl group with 6 carbon atoms or less (copolymer of fluoro acrylate, stearyl acrylate, N-methylol acrylamide, and vinyl chloride))

To a flask, 100 parts by mass of CH₂=CHCOOCH₂CH₂CₙF₂ₙ₊₁ (n = 4, 6, average value of n; about 6), 15 parts by mass of stearyl acrylate, 3 parts by mass of N-methylol acrylamide, 248.5 parts by mass of pure water, 50 parts by mass of 3-methyl-3-methoxybutanol, 18 parts by mass of polyoxyethylene (10 moles) lauryl ether, and 4 parts by mass of stearyl trimethyl ammonium chloride were added. After mixing by stirring at 45°C, the mixture was emulsified and dispersed by applying ultrasonic wave. The obtained emulsion was added to an autoclave, added with 1.5 parts by mass of 2,2-azobis(2-methylpropionamidine) dihydrochloride, and sealed. After that, 20 parts by mass of vinyl chloride were added under pressure and the reaction was performed at 60°C for 6 hours to obtain an aqueous solution of a fluorine-based water-and-oil repellant component in which concentration of copolymer is 30% by mass (herein below, abbreviated as "C6F aqueous solution").

### (Comparative Synthetic Example 3: water-and-oil repellant component having a perfluoroalkyl group with 8 carbon atoms (copolymer of fluoro acrylate, stearyl acrylate, N-methylol acrylamide, and vinyl chloride))

To a flask, 100 parts by mass of CH₂=CHCOOCH₂CH₂CₙF₂ₙ₊₁ (n = 6, 8, average value of n; about 8), 15 parts by mass of stearyl acrylate, 3 parts by mass of N-methylol acrylamide, 248.5 parts by mass of pure water, 50 parts by mass of 3-methyl-3-methoxybutanol, 18 parts by mass of polyoxyethylene (10 moles) lauryl ether, and 4 parts by mass of stearyl trimethyl ammonium chloride were added. After mixing by stirring at 45°C, the mixture was emulsified and dispersed by applying ultrasonic wave. The obtained emulsion was added to an autoclave, added with 1.5 parts by mass of 2,2-azobis(2-methylpropionamidine) dihydrochloride, and sealed. After that, 20 parts by mass of vinyl chloride were added under pressure and the reaction was performed at 60°C for 6 hours to obtain an aqueous solution of a fluorine-based water-and-oil repellant component in which concentration of copolymer is 30% by mass (herein below, abbreviated as "C8F aqueous solution").

### <Production of aqueous dispersion containing blocked polyisocyanate>

### (Preparation Example 1)

180 parts by mass of the composition obtained in Synthetic Example 1 as pyrazole blocked hydrophobic polyisocyanate, 140 parts by mass of butyl glycol acetate as an organic solvent, and 20 parts by mass of St28E obtained in Synthetic Example 8 as a non-ionic surface active agent were admixed with each other and homogenized. After slowly adding water under stirring, a homogenization treatment was carried out at 30 MPa to obtain an aqueous dispersion of a pyrazole blocked hydrophobic polyisocyanate containing 20% by mass of non-volatile components. An average particle diameter of the particles in the aqueous dispersion was 0.35 µm.

### (Preparation Example 2)

The same processes as Preparation Example 1 were carried out except that St28E obtained in Synthetic Example 8 as a non-ionic surface active agent is changed to T30E obtained in Synthetic Example 9. As a result, an aqueous dispersion of a pyrazole blocked hydrophobic polyisocyanate containing 20% by mass of non-volatile components was obtained. An average particle diameter of the particles in the aqueous dispersion was 0.33 µm.

### (Preparation Example 3)

The same processes as Preparation Example 1 were carried out except that butyl glycol acetate as an organic solvent is changed to dibutyl diglycol. As a result, an aqueous dispersion of a pyrazole blocked hydrophobic polyisocyanate containing 20% by mass of non-volatile components was obtained. An average particle diameter of the particles in the aqueous dispersion was 0.34 µm.

### (Preparation Example 4)

The same processes as Preparation Example 1 were carried out except that St28E obtained in Synthetic Example 8 as a non-ionic surface active agent is changed to T30E obtained in Synthetic Example 9 and butyl glycol acetate as an organic solvent is changed to dibutyl diglycol. As a result, an aqueous dispersion of a pyrazole blocked hydrophobic polyisocyanate containing 20% by mass of non-volatile components was obtained. An average particle diameter of the particles in the aqueous dispersion was 0.33 µm.

### (Preparation Example 5)

The same processes as Preparation Example 1 were carried out except that St28E obtained in Synthetic Example 8 as a non-ionic surface active agent is changed to St10E obtained in Synthetic Example 7 and butyl glycol acetate as an organic solvent is changed to dibutyl diglycol. As a result, an aqueous dispersion of a pyrazole blocked hydrophobic polyisocyanate containing 20% by mass of non-volatile components was obtained. An average particle diameter of the particles in the aqueous dispersion was 1.07 µm.

### (Preparation Example 6)

The same processes as Preparation Example 1 were carried out except that 15 parts by mass of St10E is used as a non-ionic surface active agent, 18 parts of ARQUAD T-28 (trade name, manufactured by Lion Corporation, effective component: 28%, stearyl trimethyl ammonium chloride) is used as a cationic surface active agent, and butyl glycol acetate as an organic solvent is changed to dibutyl diglycol. As a result, an aqueous dispersion of a pyrazole blocked hydrophobic polyisocyanate containing 20% by mass of non-volatile components was obtained. An average particle diameter of the particles in the aqueous dispersion was 1.02 µm.

### (Preparation Example 7)

The same processes as Preparation example 1 were carried out except that, as for the pyrazole blocked hydrophobic polyisocyanate, the composition obtained in Synthetic Example 1 is changed to the composition obtained in Synthetic Example 2, St28E obtained in Synthetic Example 8 as a non-ionic surface active agent is changed to T30E obtained in Synthetic Example 9, and butyl glycol acetate as an organic solvent is changed to dibutyl diglycol. As a result, an aqueous dispersion of a pyrazole blocked hydrophobic polyisocyanate containing 20% by mass of non-volatile components was obtained. An average particle diameter of the particles in the aqueous dispersion was 0.32 µm.

### (Preparation Example 8)

The same processes as Preparation Example 1 were carried out except that, as for the pyrazole blocked hydrophobic polyisocyanate, the composition obtained in Synthetic Example 1 is changed to the composition obtained in Synthetic Example 3, St28E obtained in Synthetic Example 8 as a non-ionic surface active agent is changed to T30E obtained in Synthetic Example 9, and butyl glycol acetate as an organic solvent is changed to dibutyl diglycol. As a result, an aqueous dispersion of a pyrazole blocked hydrophobic polyisocyanate containing 20% by mass of non-volatile components was obtained. An average particle diameter of the particles in the aqueous dispersion was 0.31 µm.

### (Preparation Example 9)

The same processes as Preparation Example 1 were carried out except that, as for the pyrazole blocked hydrophobic polyisocyanate, the composition obtained in Synthetic Example 1 is changed to the composition obtained in Synthetic Example 4, St28E obtained in Synthetic Example 8 as a non-ionic surface active agent is changed to T30E obtained in Synthetic Example 9, and butyl glycol acetate as an organic solvent is changed to dibutyl diglycol. As a result, an aqueous dispersion of a pyrazole blocked hydrophobic polyisocyanate containing 20% by mass of non-volatile components was obtained. An average particle diameter of the particles in the aqueous dispersion was 0.31 µm.

### (Preparation Example 10)

The same processes as Preparation Example 1 were carried out except that, as for the pyrazole blocked hydrophobic polyisocyanate, the composition obtained in Synthetic Example 1 is changed to the composition obtained in Synthetic Example 5, St28E obtained in Synthetic Example 8 as a non-ionic surface active agent is changed to T30E obtained in Synthetic Example 9, and butyl glycol acetate as an organic solvent is changed to dibutyl diglycol. As a result, an aqueous dispersion of a pyrazole blocked hydrophobic polyisocyanate containing 20% by mass of non-volatile components was obtained. An average particle diameter of the particles in the aqueous dispersion was 0.30 µm.

### (Preparation Example 11)

The same processes as Preparation Example 1 were carried out except that St28E obtained in Synthetic Example 8 as a non-ionic surface active agent is changed to St5E obtained in Synthetic Example 6 and butyl glycol acetate as an organic solvent is changed to dibutyl diglycol. As a result, an aqueous dispersion of a pyrazole blocked hydrophobic polyisocyanate containing 20% by mass of non-volatile components was obtained. An average particle diameter of the particles in the aqueous dispersion was 1.30 µm.

### (Preparation Example 12)

The same processes as Preparation Example 1 were carried out except that butyl glycol acetate as an organic solvent is changed to tripropylene glycol. As a result, an aqueous dispersion of a pyrazole blocked hydrophobic polyisocyanate containing 20% by mass of non-volatile components was obtained. An average particle diameter of the particles in the aqueous dispersion was 1.33 µm.

### (Preparation Example 13)

The same processes as Preparation Example 1 were carried out except that St28E obtained in Synthetic Example 8 as a non-ionic surface active agent is changed to T30E obtained in Synthetic Example 9 and butyl glycol acetate as an organic solvent is changed to methyl ethyl ketone. As a result, an aqueous dispersion of a pyrazole blocked hydrophobic polyisocyanate containing 20% by mass of non-volatile components was obtained. An average particle diameter of the particles in the aqueous dispersion was 1.10 µm.

### (Preparation Example 14)

The same processes as Preparation Example 1 were carried out except that, as for the pyrazole blocked hydrophobic polyisocyanate, the composition obtained in Synthetic Example 1 is changed to the composition obtained in Synthetic Example 4, St28E obtained in Synthetic Example 8 as a non-ionic surface active agent is changed to T30E obtained in Synthetic Example 9, and butyl glycol acetate as an organic solvent is changed to methyl ethyl ketone. As a result, an aqueous dispersion of a pyrazole blocked hydrophobic polyisocyanate containing 20% by mass of non-volatile components was obtained. An average particle diameter of the particles in the aqueous dispersion was 1.24 µm.

### (Comparative Preparation Example 1)

The same processes as Preparation Example 1 were carried out except that, as for the pyrazole blocked hydrophobic polyisocyanate, the composition obtained in Synthetic Example 1 is changed to the composition obtained in Comparative Synthetic Example 1, St28E obtained in Synthetic Example 8 as a non-ionic surface active agent is changed to T30E obtained in Synthetic Example 9, and 140 parts by mass of butyl glycol acetate as an organic solvent is changed to 20 parts by mass of methyl ethyl ketone. As a result, an aqueous dispersion of a methyl ethyl ketooxime blocked hydrophobic polyisocyanate containing 20% by mass of non-volatile components was obtained. An average particle diameter of the particles in the aqueous dispersion was 0.31 µm.

### (Comparative Preparation Example 2)

To the pyrazole blocked hydrophilic polyisocyanate composition (180 parts by mass) obtained in Comparative Synthetic Example 2, water was slowly added under stirring, and then a homogenization treatment was carried out at 30 MPa to obtain an aqueous dispersion of a pyrazole blocked hydrophilic polyisocyanate containing 18% by mass of non-volatile components. An average particle diameter of the particles in the aqueous dispersion was 0.29 µm.

### <Production of functional textile product>

### (Example 1)

As a water-and-oil repellant component, 60 parts by mass of the C6F aqueous solution obtained in Synthetic Example 10 was admixed with 11 parts of the aqueous dispersion obtained in Preparation Example 1 as a blocked isocyanate component. The resulting mixture was diluted with ion exchange water to be a solid matter concentration of 20% by mass. As a result, a water-and-oil repellant composition was obtained. Further, as for the aqueous dispersion obtained in Preparation Example 1 as a blocked isocyanate component, the dispersion right after the preparation was used.

By following the conditions to be described below, polyester 100% taffeta or 6-nylon 100% taffeta was dyed. Subsequently, it was treated with the water-and-oil repellant composition to obtain a functional textile product having a water-and-oil repellant property.

Furthermore, the conditions for dyeing the used fabrics and the conditions for fixing are described below.

### [Conditions for dyeing treatment of polyester taffeta]

Sample fabric: polyester 100% taffeta (weight per unit area: 110 g/cm²) (Undyed fabric)
Treatment condition: dyeing → RC → cleaning (5 minutes × two times) → dehydrating → air drying

### (Dyeing)

Dyeing: 130°C × 30 minutes (temperature increase: 2°C/min)
Bath ratio: 1 : 20
Bath composition: Disperse dye (Dianix Blue UN-SE) 2.0% o.w.f, 80% acetic acid 0.4 g/L, dispersing/levelling agent (NICCA SUNSOLT RM-340E, manufactured by NICCA CHEMICAL CO., LTD.) 0.5 g/L

### (RC (reduction cleaning))

RC: 80°C × 15 minutes
Bath ratio: 1 : 20
Bath composition: SUNMOL RC-120 2 g/L

### [Conditions for dyeing treatment of 6-nylon taffeta]

Sample fabric: 6-nylon 100% taffeta (weight per unit area: 110 g/cm²) (Undyed fabric)
Treatment condition: dyeing → cleaning (5 minutes × two times) → dehydrating → air drying
Temperature time: 98°C × 30 minutes (temperature increase: 2°C/min)
Bath ratio: 1 : 20
Bath composition: Milling dye (Kayanol Milling Blue BW) 2.0% o.w.f., 80% acetic acid 1.5% o.w.f, ammonium acetate 3.0% o.w.f, leveling agent (NEWBON TS-400, manufactured by NICCA CHEMICAL CO., LTD.) 2.0% o.w.f.

### [Conditions for fixing treatment of 6-nylon taffeta dyed fabrics]

Sample fabric: 6-nylon taffeta (dyed fabric)
Treatment condition: fixing → cleaning (one time)→ dehydrating → air drying
Temperature time: 90°C × 20 minutes (temperature increase: 2°C/min)
Bath ratio: 1 : 20
Fixing agent: SUNLIFE E-37 (manufactured by NICCA CHEMICAL CO., LTD.) 2.0% o.w.f.

Furthermore, the conditions for treating fabrics with the water-and-oil repellant composition are described below.

### [Conditions for treating with a water-and-oil repellant composition]

Sample fabric: polyester taffeta dyed fabric
Conditions for treatment: padding → drying → curing
Padding: Bath composition (water-and-oil repellant composition (non-volatile component 20%) 5% soln., UNIKAREAIN 380K (manufactured by Union Chemical Co., Ltd.) 0.3% soln., UNIKA CATALYST 3-P (manufactured by Union Chemical Co., Ltd.) 0.1% soln.), 1 dip - 1 nip (one impregnation (dipping) in treatment bath and one interval (nip), pick up 60%
Drying: 120°C × 1 minutes
Curing: 180°C × 30 seconds

### Sample fabric: 6-nylon taffeta dyed fabric (fixed fabric)

Conditions for treatment: padding → drying → curing
Padding: Bath composition (water-and-oil repellant composition (non-volatile component 20%) 5% soln., UNIKAREAIN 380K (manufactured by Union Chemical Co., Ltd.) 0.3% soln., UNIKA CATALYST 3-P (manufactured by Union Chemical Co., Ltd.) 0.1% soln.), 1 dip - 1 nip (one impregnation (dipping) in treatment bath and one interval (nip), pick up 85%
Drying: 120°C × 1 minutes
Curing: 170°C × 30 seconds

### (Examples 2 to 14 and Comparative Examples 1 to 4)

The same process as Example 1 were carried out except that the water-and-oil repellant component and blocked polyisocyanate component of Example 1 were changed to those as described in Tables 1 to 5. As a result, each of the functional textile products having a water-and-oil repellant property of Examples 2 to 14 and Comparative Examples 1 to 4 was obtained.

### <Evaluation of functional textile product>

With the functional textile products obtained from Examples and Comparative Examples, a water-and-oil repellant test and wash durability test were performed as described below. The obtained results are summarized in Tables 1 to 5.

### (1) Water repellant property

The treated fabrics obtained from above were subjected to evaluation according to 7.2 Water repellency test as specified in JIS L 1092 : 2009 (that is, a spray test). The evaluation was made according to the following criteria, in which somewhat good performance was graded as "+" and somewhat poor performance was graded as "-." Meanwhile, "++" indicates better performance than "+."
5: No adhesion of water drops or wetting on surface.
4: Slight adhesion of water drops or wetting on surface.
3: Partial wetting on surface.
2: Wetting on almost half of surface.
1: Wetting on entire surface

### (2) Oil repellant property

The treated fabrics obtained from above were subjected to the test based on AATCC TM118-2002. Specifically, few drops of the test solution described in Table 6 were applied on two spots of the sample fabric to have a diameter of about 4 mm. The highest grade of the test solution which does not exhibit any penetration at both spots after a lapse of thirty seconds was taken as the oil repellant property.

### (3) Wash durability

The treated fabrics obtained from above were washed based on Method 103 of Table 1 attached to JIS L 0217 (1995). The resulting washed fabric was then subjected to the water repellency and oil repellency test described above. Meanwhile, L0 indicates the result before wash, while L10, 20, and 30 indicate the results after the wash 10 times, 20 times, and 30 times, respectively.

### <Evaluation of hydrophobicity (self-emulsifying property) of blocked isocyanate component>

The aqueous dispersions (200 ml) containing 18% by mass of the blocked isocyanate components obtained from Synthetic Examples and Comparative Synthetic Examples were treated by T. K. HOMODISPER (trade name, manufactured by PRIMIX Corporation) for 10 minutes at 2000 rpm and a room temperature. State of the aqueous dispersion right after the treatment and state of the aqueous solution after adding it to a mayonnaise bottle 225 (manufactured by NIHON TAISANBIN GLASS BOTTLE MFG. CO., LTD.) followed by sealing and keeping it at 45°C were evaluated according to the following evaluation criteria.
A: After treatment of 2000 rpm × 10 minutes, no homogeneous aqueous dispersion was obtained, or even when a homogeneous aqueous dispersion was obtained, it was separated less than 12 hours at 45°C.
B: After treatment of 2000 rpm × 10 minutes, a homogeneous aqueous dispersion was obtained and no separation was observed after 12 hours or longer at 45°C.

### <Evaluation of stability of aqueous dispersion of blocked isocyanate (Stability 1)>

Stabilities of aqueous dispersions of blocked isocyanates which had been obtained from Preparation Examples and Comparative Preparation Examples were evaluated by determining the week number or day number at which precipitation was observed after keeping the aqueous dispersion at 45°C.

### <Evaluation of storage stability of water-and-oil repellant composition (Stability 2)>

Storage stabilities of water-and-oil repellant compositions which had been obtained from Preparation Examples and Comparative Preparation Examples were evaluated by determining the week number or day number at which precipitation was observed after keeping the aqueous dispersion at 45°C.

### <Evaluation of chemical incorporation stability (Stability 3)>

Stability of the treated bath in which a fixing agent for nylon was added (that is, incorporated) into a water-and-oil repellant composition treatment bath was evaluated according to the following method.
The test bath with the following composition (300 ml) was subjected to an aeration test. After that, it was filtered through a black cotton cloth and residues on the black cotton cloth were observed with a naked eye.

### (Test bath composition)

Aqueous solution of water-and-oil repellant component 5.0% soln.
Blocked isocyanate component 0.8% soln.
SUNLIFE E-37 (trade name, manufactured by NICCA CHEMICAL CO., LTD., fixing agent for nylon) 240 ppm

### (Conditions for aeration)

Room temperature for 10 minutes, air flow amount of 2 L/min, Kinoshita type ball filter was used.

### (Evaluation criteria)

A: No residues on black cotton cloth
B: Slight amount of residues on black cotton cloth
C: Large amount of residues on black cotton cloth

**[Table 1]**

| | | | Example 1 | Example 2 | Example 3 | Example 4 |
|---|---|---|---|---|---|---|
| Water-and-oil repellant component | Synthetic Example | | Synthetic Example 10 | Synthetic Example 10 | Synthetic Example 10 | Synthetic Example 10 |
| | Water-and-oil repellant component | | C6F aqueous solution | C6F aqueous solution | C6F aqueous solution | C6F aqueous solution |
| Blocked isocyanate component | Preparation Example | | Preparation Example 1 | Preparation Example 2 | Preparation Example 3 | Preparation Example 4 |
| | NCO component | | Isocyanurate | Isocyanurate | Isocyanurate | Isocyanurate |
| | Blocking agent | | DMP(3) | DMP(3) | DMP(3) | DMP(3) |
| | Hydrophilic blocking agent | | None | None | None | None |
| | Hydrophobicity | | A | A | A | A |
| Surface active agent component | Synthetic Example | | Synthetic Example 8 | Synthetic Example 9 | Synthetic Example 8 | Synthetic Example 9 |
| | Surface active agent | | St28E | T30E | St28E | T30E |
| Solvent | | | BGA_{c} | BGA_{c} | DBDG | DBDG |
| Stability 1 | | | 3 Weeks | 4 Weeks or longer | 3 Weeks | 4 Weeks or longer |
| Stability 2 | | | 3 Weeks | 4 Weeks or longer | 3 Weeks | 4 Weeks or longer |
| Stability 3 | | | c | C | A | A |
| Polyester taffeta | Water repellant property | L0 | 5 | 5 | 5 | 5 |
| | | L1 0 | 5 | 5 | 5 | 5 |
| | | L2 0 | 4 | 4 | 4 | 4 |
| | | L3 0 | 4- | 4- | 4- | 4- |
| | Oil repellant property | L0 | 6 | 6 | 6 | 6 |
| | | L1 0 | 2 | 2 | 2 | 2 |
| 6-Nylon taffeta | Water repellant property | L0 | 5 | 5 | 5 | 5 |
| | | L1 0 | 4- | 4- | 4- | 4- |
| | | L2 0 | 3++ | 3++ | 3++ | 3++ |
| | | L3 0 | 3+ | 3+ | 3+ | 3+ |
| | Oil repellant property | L0 | 6 | 6 | 6 | 6 |
| | | L1 0 | 2 | 2 | 2 | 2 |

| | | | | | | |
|---|---|---|---|---|---|---|
| DMP: 3,5-dimethyl pyrazole, and number within the ( ) indicates mole number MEKO: methyl ethyl ketooxime, and number within the ( ) indicates mole number T-28: ARQUAD T-28 EO: ethyleneoxy group, and number within the ( ) indicates the EO content (% by mass) in the blocked isocyanate compound Number within the ( ) of the carboxylate indicates the carboxylate group content (% by mass) in the blocked isocyanate compound BGAc: butyl glycol acetate DBDG: tripropylene glycol MEK: methyl ethyl ketone | | | | | | |

**[Table 2]**

| | | | Example 5 | Example 6 | Example 7 | Example 8 |
|---|---|---|---|---|---|---|
| Water-and-o il repellant component | Synthetic Example | | Synthetic Example 10 | Synthetic Example 10 | Synthetic Example 10 | Synthetic Example 10 |
| | Water-and-oil repellant component | | C6F aqueous solution | C6F aqueous solution | C6F aqueous solution | C6F aqueous solution |
| Blocked isocyanate component | Preparation Example | | Preparation Example 5 | Preparation Example 6 | Preparation Example 7 | Preparation Example 8 |
| | NCO component | | Isocyanurate | Isocyanurate | Biurette | Isocyanurate |
| | Blocking agent | | DMP(3) | DMP(3) | DMP(3) | DMP(2) +MEKO(1) |
| | Hydrophilic blocking agent | | None | None | None | None |
| | Hydrophobicity | | A | A | A | A |
| Surface active agent component | Synthetic Example | | Synthetic Example 7 | Synthetic Example 7 + Cation | Synthetic Example 9 | Synthetic Example 9 |
| | Surface active agent | | St10E | St10E +T-28 | T30E | T30E |
| Solvent | | | DBDG | DBDG | DBDG | DBDG |
| Stability 1 | | | 1 Week | 3 Weeks | 4 Weeks or longer | 4 Weeks or longer |
| Stability 2 | | | 1 Week | 3 Weeks | 4 Weeks or longer | 4 Weeks or longer |
| Stability 3 | | | A | A | A | A |
| Polyester taffeta | Water repellant property | L0 | 5 | 5 | 5 | 5 |
| | | L1 0 | 5 | 5 | 5 | 5 |
| | | L2 0 | 4 | 4 | 4 | 4 |
| | | L3 0 | 4- | 4- | 4- | 4- |
| | Oil repellant property | L0 | 6 | 6 | 6 | 6 |
| | | L1 0 | 2 | 2 | 2 | 2 |
| 6-Nylon taffeta | Water repellant property | L0 | 5 | 5 | 5 | 5 |
| | | L1 0 | 4- | 4- | 4- | 4- |
| | | L2 0 | 3++ | 3++ | 4- | 3++ |
| | | L3 0 | 3+ | 3+ | 3+ | 3+ |
| | Oil repellant property | L0 | 6 | 6 | 6 | 6 |
| | | L1 0 | 2 | 2 | 2 | 2 |

| | | | | | | |
|---|---|---|---|---|---|---|
| DMP: 3,5-dimethyl pyrazole, and number within the ( ) indicates mole number MEKO: methyl ethyl ketooxime, and number within the ( ) indicates mole number T28: ARQUAD T-28 EO: ethyleneoxy group, and number within the ( ) indicates the EO content (% by mass) in the blocked isocyanate compound Number within the ( ) of the carboxylate indicates the carboxylate group content (% by mass) in the blocked isocyanate compound BGAc: butyl glycol acetate DBDG: tripropylene glycol MEK: methyl ethyl ketone | | | | | | |

**[Table 3]**

| | | | | | | |
|---|---|---|---|---|---|---|
| | | | Example 9 | Example 10 | Example 11 | Example 12 |
| Water-and-o il repellant component | Synthetic Example | | Synthetic Example 10 | Synthetic Example 10 | Synthetic Example 10 | Synthetic Example 10 |
| | Water-and-oil repellant component | | C6F aqueous solution | C6F aqueous solution | C6F aqueous solution | C6F aqueous solution |
| Blocked isocyanate component | Preparation Example | | Preparation Example 9 | Preparation Example 10 | Preparation Example 11 | Preparation Example 12 |
| | NCO component | | Isocyanurate | Isocyanurate | Isocyanurate | Isocyanurate |
| | Blocking agent | | DMP(2.28) | DMP(2.65) | DMP(3) | DMP(3) |
| | Hydrophilic blocking agent | | EO(3%) | Carboxylate (1%) | None | None |
| | Hydrophobicit y | | A | A | A | A |
| Surface active agent component | Synthetic Example | | Synthetic Example 9 | Synthetic Example 9 | Synthetic Example 6 | Synthetic Example 8 |
| | Surface active agent | | T30E | T30E | St5E | St28E |
| Solvent | | | DBDG | DBDG | BGAc | TPG |
| Stability 1 | | | 4 Weeks or longer | 4 Weeks or longer | Less than 1 day | Less than 1 day |
| Stability 2 | | | 4 Weeks or longer | 4 Weeks or longer | Less than 1 day | Less than 1 day |

| Stability 3 | | | A | A | C | c |
|---|---|---|---|---|---|---|
| Polyester taffeta | Water repellant property | L0 | 5 | 5 | 5 | 5 |
| | | L1 0 | 4+ | 4+ | 5 | 5 |
| | | L2 0 | 4- | 4- | 4 | 4 |
| | | L3 0 | 3++ | 3+ | 4- | 4- |
| | Oil repellant property | L0 | 6 | 6 | 6 | 6 |
| | | L1 0 | 2 | 2 | 2 | 2 |
| 6-Nylon taffeta | Water repellant property | L0 | 5 | 5 | 5 | 5 |
| | | L1 0 | 4- | 3++ | 4- | 4- |
| | | L2 0 | 3+ | 3+ | 3++ | 3++ |
| | | L3 0 | 3 | 3 | 3+ | 3+ |
| | Oil repellant property | L0 | 6 | 6 | 6 | 6 |
| | | L1 0 | 2 | 2 | 2 | 2 |

| | | | | | | |
|---|---|---|---|---|---|---|
| DMP: 3,5-dimethyl pyrazole, and number within the ( ) indicates mole number MEKO: methyl ethyl ketooxime, and number within the ( ) indicates mole number T-28: ARQUAD T-28 EO: ethyleneoxy group, and number within the ( ) indicates the EO content (% by mass) in the blocked isocyanate compound Number within the ( ) of the carboxylate indicates the carboxylate group content (% by mass) in the blocked isocyanate compound BGAc: butyl glycol acetate DBDG: tripropylene glycol MEK: methyl ethyl ketone | | | | | | |

**[Table 4]**

| | | | Example 13 | Example 14 |
|---|---|---|---|---|
| Water-and-oil repellant component | Synthetic Example | | Synthetic Example 10 | Synthetic Example 10 |
| | Water-and-oil repellant component | | C6F aqueous solution | C6F aqueous solution |
| Blocked isocyanate component | Preparation Example | | Preparation Example 13 | Preparation Example 14 |
| | NCO component | | Isocyanurate | Isocyanurate |
| | Blocking agent | | DMP(3) | DMP(2.28) |
| | Hydrophilic blocking agent | | None | EO(3%) |
| | Hydrophobici ty | | A | A |
| Surface active agent component | Synthetic Example | | Synthetic Example 9 | Synthetic Example 9 |
| | Surface active agent | | T30E | T30E |
| Solvent | | | MEK | MEK |
| Stability 1 | | | 3 Days | 3 Days |
| Stability 2 | | | 3 Days | 3 Days |
| Stability 3 | | | C | C |
| Polyester taffeta | Water repellant property | L0 | 5 | 5 |
| | | L1 0 | 5 | 4+ |
| | | L2 0 | 4 | 4- |
| | | L3 0 | 4- | 3++ |
| | Oil repellant property | L0 | 6 | 6 |
| | | L1 0 | 2 | 2 |
| 6-Nylon | Water | L0 | 5 | 5 |
| taffeta | repellant property | L1 0 | 4- | 4- |
| | | L2 0 | 3++ | 3+ |
| | | L3 0 | 3+ | 3 |
| | Oil repellant property | L0 | 6 | 6 |
| | | L1 0 | 2 | 2 |

| | | | | |
|---|---|---|---|---|
| DMP: 3,5-dimethyl pyrazole, and number within the ( ) indicates mole number MEKO: methyl ethyl ketooxime, and number within the ( ) indicates mole number T-28: ARQUAD T-28 EO: ethyleneoxy group, and number within the ( ) indicates the EO content (% by mass) in the blocked isocyanate compound Number within the ( ) of the carboxylate indicates the carboxylate group content (% by mass) in the blocked isocyanate compound BGAc: butyl glycol acetate DBDG: tripropylene glycol MEK: methyl ethyl ketone | | | | |

**[Table 5]**

| | | | Comparative Example 1 | Comparative Example 2 | Comparative Example 3 | Comparative Example 4 |
|---|---|---|---|---|---|---|
| Water-and-oil repellant component | Synthetic Example | | Synthetic Example 10 | Synthetic Example 10 | Synthetic Example 11 | Synthetic Example 11 |
| | Water-and-oil repellant component | | C6F aqueous solution | C6F aqueous solution | C8F aqueous solution | C8F aqueous solution |
| Blocked isocyanate component | Preparation Example | | Comparative preparation Example 1 | Comparative preparation Example 2 | Comparative preparation Example 1 | Preparation Example 1 |
| | NCO component | | Isocyanurate | Isocyanurate | Isocyanurate | Isocyanurate |
| | Blocking agent | | MEKO(3) | DMP(2.82) | MEKO(3) | DMP(3) |
| | Hydrophilic blocking agent | | None | EO(11.4%) | None | None |
| | Hydrophobicit y | | A | B | A | A |
| Surface active agent component | Synthetic Example | | Synthetic Example 9 | - | Synthetic Example 8 | Synthetic Example 8 |
| | Surface active agent | | T30E | None | St28E | St28E |
| Solvent | | | MEK | None | MEK | BGA_{c} |
| Stability 1 | | | 4 Weeks or longer | 4 Weeks or longer | 4 Weeks or longer | 3 Weeks |
| Stability 2 | | | 4 Weeks or longer | 4 Weeks or longer | 4 Weeks or longer | 3 Weeks |
| Stability 3 | | | C | BC | C | C |
| Polyester taffeta | Water repellant property | L0 | 5 | 5 | 5 | 5 |
| | | L1 0 | 3 | 4- | 5 | 5 |
| | | L2 0 | 2 | 3+ | 4 | 4 |
| | | L3 0 | 2 | 3 | 4- | 4- |
| | Oil repellant property | L0 | 6 | 6 | 6 | 6 |
| | | L1 0 | 1 | 2 | 2 | 2 |
| 6-Nylon taffeta | Water repellant property | L0 | 5 | 5 | 5 | 5 |
| | | L1 0 | 3 | 3+ | 4- | 4- |
| | | L2 0 | 2 | 3 | 3++ | 3++ |
| | | L3 0 | 2 | 3- | 3+ | 3+ |
| | Oil repellant property | L0 | 6 | 6 | 6 | 6 |
| | | L1 0 | 1 | 2 | 2 | 2 |

| | | | | | | |
|---|---|---|---|---|---|---|
| DMP: 3,5-dimethyl pyrazole, and number within the ( ) indicates mole number MEKO: methyl ethyl ketooxime, and number within the ( ) indicates mole number T-28: ARQUAD T-28 EO: ethyleneoxy group, and number within the ( ) indicates the EO content (% by mass) in the blocked isocyanate compound Number within the ( ) of the carboxylate indicates the carboxylate group content (% by mass) in the blocked isocyanate compound BGAc: butyl glycol acetate DBDG: tripropylene glycol MEK: methyl ethyl ketone | | | | | | |

**[Table 6]**

| Level | Test solution | Surface tension (µN/cm) |
|---|---|---|
| 8 | n-Heptane | 200 |
| 7 | n-Octane | 218 |
| 6 | n-Decane | 235 |
| 5 | n-Dodecane | 250 |
| 4 | n-Tetradecane | 267 |
| 3 | n-Hexadecane | 273 |
| 2 | Mixture liquid of n-Hexadecane/Nujol = 35/65 (mass ratio) | 296 |
| 1 | Nujol | 312 |
| 0 | Less than 1 | - |

As listed in Tables 1 to 4, the treated fabrics of Examples 1 to 14 were found to have a good long lasting water-and-oil repellant property. Among them, it was confirmed that the treated fabrics obtained by using a hydrophobic polyisocyanate containing no hydrophilic group at all in Examples 1 to 8 and 11 to 13 exhibited particularly good performance.

On the other hand, in Comparative Example 1 in which the blocking was made with a compound other than pyrazole compound or Comparative Example 2 in which a hydrophilic group was included in a great amount, the water repellant property was lowered by half-level to one-level.

Further, the treated fabrics of Examples 1 to 14 exhibited the long lasting water-and-oil repellant property which was comparable to the treated fabrics of Comparative Examples 3 and 4 in which an isocyanate compound was used in combination with the water-and-oil repellant component having a perfluoroalklyl group with 8 carbon atoms. In this regard, it becomes possible by the present invention to replace or lower the use of the water-and-oil repellant component having a perfluoroalklyl group with 8 carbon atoms, which is known to have a problem of PFOA.

## Claims

1. A water-and-oil repellant composition comprising an aqueous dispersion of a pyrazole blocked hydrophobic polyisocyanate including a pyrazole blocked hydrophobic polyisocyanate represented by the following formula (I) and a non-ionic surface active agent, and a water-and-oil repellant component having a perfluoroalkyl group with 6 or less carbon atoms:
R (-NH-CO-Z)ₘ (I)
[in the formula (I), m represents an integer of 2 or more; R represents a residue after an "m" number of isocyanate groups have been removed from a polyisocyanate compound with an "m" number of isocyanate groups; Z represents a residue, which is the same or different from each other, after hydrogen atoms have been removed from active hydrogen-containing compounds that are capable of reacting with an isocyanate group, and at least two of the Z's are a pyrazole groups represented by the following formula (II): 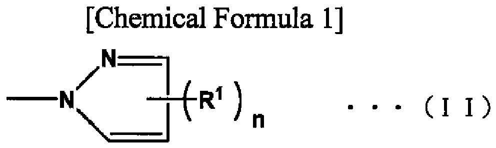 {in the formula (II), n represents an integer of from 0 to 3; if n is 1 or higher, R¹, which is the same or different from each other, represents an alkyl group having 1 to 6 carbon atoms, an alkenyl group having 2 to 6 carbon atoms, an aralkyl group having 7 to 12 carbon atoms, an N-substituted carbamyl group, a phenyl group, -NO₂, a halogen atom, or -CO-O-R² (in the formula, R² is a hydrogen atom or an alkyl group having 1 to 6 carbon atoms)}].

2. The water-and-oil repellant composition according to claim 1, wherein a liquid medium of the aqueous dispersion of the pyrazole blocked hydrophobic polyisocyanate is water, or a mixture including water and at least one organic solvent selected from the group consisting of ketones, esters, ethers, aromatic hydrocarbons, and aliphatic hydrocarbons, that are separated when admixed with water.

3. The water-and-oil repellant composition according to claim 1 or 2, wherein the liquid medium of the aqueous dispersion of the pyrazole blocked hydrophobic polyisocyanate is a mixture including water and ethers.

4. The water-and-oil repellant composition according to any one of claims 1 to 3, wherein the non-ionic surface active agent is a non-ionic surface active agent with HLB of 10 or more.

5. The water-and-oil repellant composition according to any one of claims 1 to 4, wherein all Z's in the formula (I) is a pyrazole group represented by the formula (II).

6. A functional textile product comprising a water-and-oil repellant property provided by the water-and-oil repellant composition according to any one of claims 1 to 5.

7. A method for producing a functional textile product comprising a water-and-oil repellant property, the method comprising contacting a textile substrate with a treatment liquid A including an aqueous dispersion of a pyrazole blocked hydrophobic polyisocyanate which includes a pyrazole blocked hydrophobic polyisocyanate represented by the following formula (I) and a non-ionic surface active agent, and a treatment liquid B including a water-and-oil repellant component having a perfluoroalkyl group with 6 carbon atoms or less, or contacting a textile substrate with a treatment liquid C including an aqueous dispersion of a pyrazole blocked hydrophobic polyisocyanate which includes the pyrazole blocked hydrophobic polyisocyanate represented by the following formula (I) and a non-ionic surface active agent, and a water-and-oil repellant component having a perfluoroalkyl group with 6 carbon atoms or less:
R(-NH-CO-Z)ₘ (I)
[in the formula (I), m represents an integer of 2 or more, R represents a residue after an "m" number of isocyanate groups have been removed from a polyisocyanate compound with an "m" number of isocyanate groups, Z represents a residue, which is the same or different from each other, after hydrogen atoms have been removed from active hydrogen-containing compounds that are capable of reacting with an isocyanate group, and at least two of the Z's are a pyrazole group represented by the following formula (II): 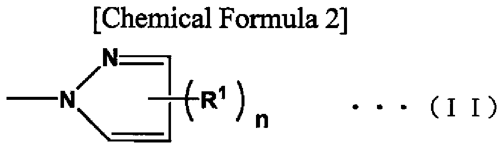 {in the formula (II), n represents an integer of from 0 to 3; if n is 1 or higher, R¹, which is the same or different from each other, represents an alkyl group having 1 to 6 carbon atoms, an alkenyl group having 2 to 6 carbon atoms, an aralkyl group having 7 to 12 carbon atoms, an N-substituted carbamyl group, a phenyl group, -NO₂, a halogen atom, or -CO-O-R² (in the formula, R² is a hydrogen atom or an alkyl group having 1 to 6 carbon atoms)}].
